# EUROPEAN PATENT SPECIFICATION

(11) **EP 2 187 684 B1**
(45) Date of publication and mention of the grant of the patent: **12.02.2014**
(21) Application number: 07806538.0
(22) Date of filing: 31.08.2007
(51) Int. Cl.: H04W 16/00, H04W 4/00

(54) **MESSAGE EXCHANGE METHOD AND WIRELESS COMMUNICATION SYSTEM**
NACHRICHTENVERMITTLUNGSVERFAHREN UND DRAHTLOSES KOMMUNIKATIONSSYSTEM
PROCÉDÉ DE COMMUTATION DE MESSAGES ET SYSTÈME DE COMMUNICATION SANS FIL

(43) Date of publication of application: 19.05.2010
(73) Proprietor: Fujitsu Limited, Kawasaki-shi, Kanagawa 211-8588 (JP)
(72) Inventor: OKUDA, Masato, Kawasaki-shi Kanagawa 211-8588 (JP)
(74) Representative: Fenlon, Christine Lesley
(86) International application number: PCT/JP2007/067065
(87) International publication number: WO 2009/028102

(56) References cited:
- JP-A- 2004 158 965
- JP-A- 2006 311 411
- JP-A- 2006 319 940
- US-A1- 2007 104 221
- US-A1- 2007 110 004

## Description

### Technical Field

The present invention relates to a message exchange method, a wireless communication system, a wireless terminal, and a wireless base station which are provided for performing wireless communication. In particular, the present invention relates to a message exchange method, a wireless communication system, a wireless terminal, and a wireless base station which perform processing for allocating a bandwidth to the wireless terminal.

### Background Art

The IEEE 802.16 Working Group (802.16 WG) specifies a point-to-multipoint (P-MP) communication system which enables connection of a plurality of terminals to a wireless base station. The 802.16 WG provides two types of standards 802.16d (IEEE 802.16-2004) and 802.16e (IEEE 802.16e-2005), where IEEE 802.16-2004 is provided mainly for fixed communications, and IEEE 802.16e-2005 is provided for mobile communications. The above standards provide specifications for a plurality of physical layers, and technologies such as OFDM (Orthogonal Frequency Division Multiplex) or OFDMA (Orthogonal Frequency Division Multiplex Access) are mainly used.

The standards 802.16d/e basically specify a point-to-multipoint (P-MP) connection, in which a plurality of wireless terminals (MSs) is connected to a wireless base station (BS). MAC (Media Access Control) messages are exchanged between the BS and each MS before communication is started.

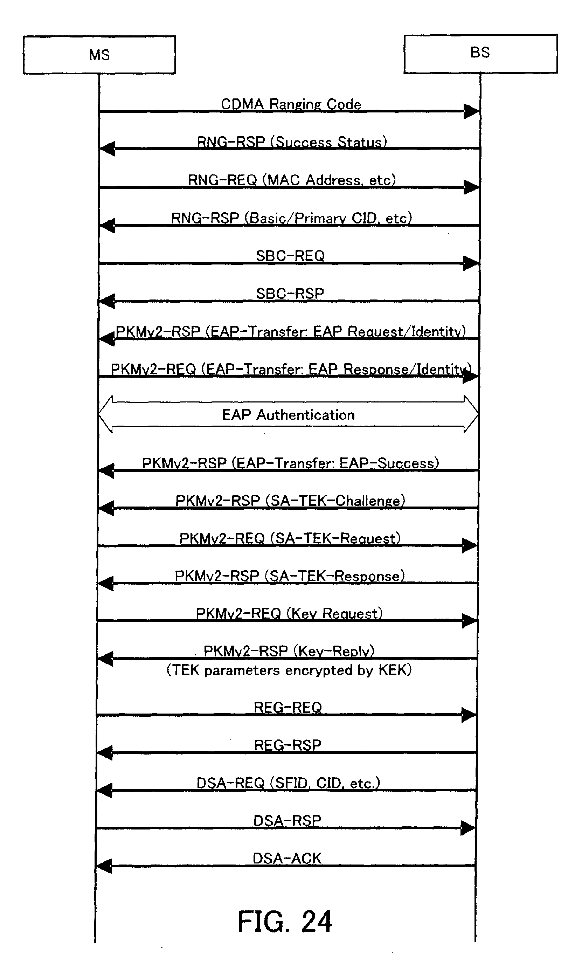

FIG. 24 is a sequence diagram indicating an outline of a procedure for exchanging main MAC messages. In FIG. 24, only the main MAC messages are indicated. However, in the practical use of the techniques in accordance with IEEE 802.16d/e, the MS needs a wireless resource allocated by the BS, when each MS transmits to the BS various messages such as the MAC messages.

For example, although the CDMA Ranging Code can be transmitted by use of a bandwidth which can be used by any MS, the other messages following the CDMA Ranging Code such as the "RNG-REQ" message are required to be transmitted through a bandwidth allocated to each MS by the BS. Therefore, in practice, signals or messages for requesting a bandwidth or allocating a bandwidth are exchanged between the BS and the MS before messages such as the "RNG-REQ" message are transmitted from the MS to the BS.

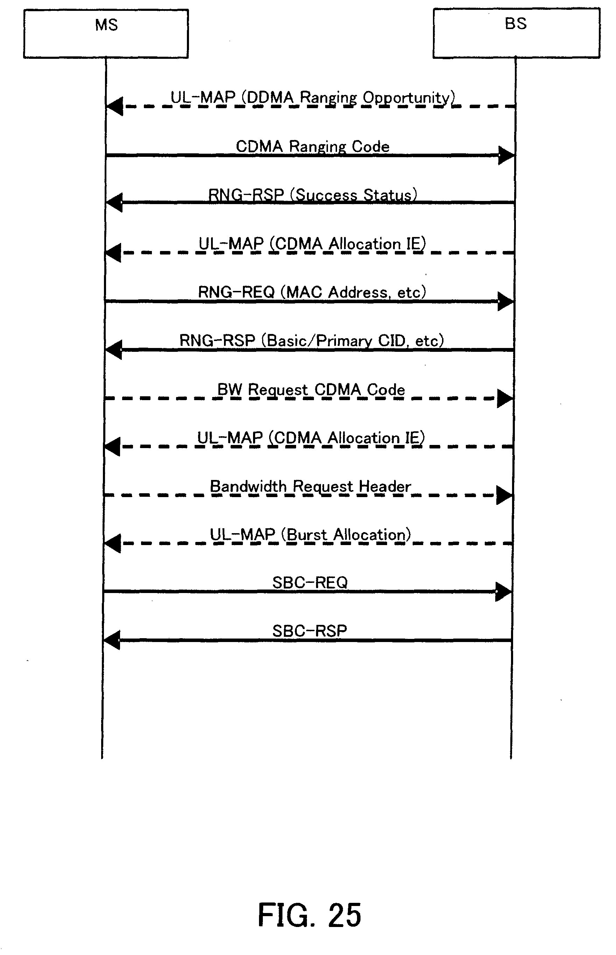

FIG. 25 is a sequence diagram indicating details of a procedure for exchanging messages for bandwidth allocation. In FIG. 25, details of messages preceding the "SBC-REQ" message (which is indicated in the sequence diagram of FIG. 24) are indicated, and the messages necessary for allocation of a bandwidth are indicated by dashed lines.

Here, a procedure for transmitting the "SBC-REQ" message by the MS after the MS receives an "RNG-RSP" message is briefly explained. First, the MS transmits a "BW Request CDMA Code" message to the BS. The "BW Request CDMA Code" message requests allocation of a bandwidth for transmitting header information having a predetermined length (6 bytes). When the BS receives the "BW Request CDMA Code" message, the BS transmits to the MS a "UL-MAP" message containing the information "CDMA Allocation IE" for allocation, to the MS, of a bandwidth for an uplink (from the MS to the BS). The information "CDMA Allocation IE" contains codes indicating a subchannel, a symbol, a modulation technique, an encoding technique, and the like for use by the MS. Thus, a bandwidth necessary for transmission of the header information to the MS can be allocated to the MS.

When the MS receives the above "UL-MAP" message, the MS transmits to the BS a "Bandwidth Request Header" message designating a bandwidth necessary for transmission of the "SBC-REQ" message by using the allocated bandwidth. The BS recognizes the bandwidth needed by the MS on the basis of the "Bandwidth Request Header" message. Then, the BS allocates the bandwidth to the MS, and transmits to the MS a "UL-MAP" message indicating the allocated bandwidth. When the MS receives the "UL-MAP" message, the MS transmits the "SBC-REQ" message to the BS by use of the allocated bandwidth.

The above communication procedure is indicated in the IEEE 802.16d and IEEE 802.16e standards. (See the nonpatent literatures 1 and 2.)

The nonpatent literature 1: "IEEE-Standard for Local and Metropolitan Area Networks Part 16: Air Interface for Fixed Broadband Wireless Access System," IEEE Std 802.16-2004, USA, IEEE, 1 October 2004.

The nonpatent literature 2: "IEEE Standard for Local and Metropolitan Area Networks Part 16: Air Interface for Fixed and Mobile Broadband Wireless Access Systems, Amendment for Physical and Medium Access Control Layers for Combined Fixed and Mobile Operation in Licensed Bands" IEEE Std 802.16e-2005 and IEEE Std 802.16-2004/Cor 1-2005, USA, IEEE, 25 February 2006.

US 2007104221 discloses systems and methods for allocating bandwidth in a broadband wireless network, in which bandwidth is allocated to a mobile station during an established communication session through the use of a poll-me indicator in a MAC header received in an uplink data transmission from the mobile station. The poll-me indicator indicates a request for additional bandwidth for a subsequent uplink transmission of an established communication session.

US 2007110004 discloses a method and a base station for allocating bandwidth for subscriber stations and a backhaul station through taking into joint consideration uplink and down bandwidth requests from respective subscriber stations in a wireless single-hop self-backhaul network. Upon receipt of information on bandwidth requests from the subscriber stations, the base station takes uplink and downlink bandwidth requests into joint consideration, allocates bandwidth for the subscriber stations and the backhaul station, and then notifies the subscriber stations and the backhaul station.

### Disclosure of Invention

### Problems to be Solved by the Invention

In order to transmit a message uplink from the MS, many preparatory messages are required to be exchanged for requesting and allocating a bandwidth, and the exchange of such messages increase delay and wastefully use bandwidths. In the example of FIG. 25, the four messages are exchanged for allocation of a bandwidth between the BS and the MS in order to transmit an "SBC-REQ" message from the MS to the BS.

In addition, when a message or the like on a wireless link is discarded, it takes a long time before the same message is resent.

The present invention is made in view of the above problems, and the object of the present invention is to provide a message exchange method, a wireless communication system, a wireless terminal, and a wireless base station which enable efficient message transmission from the MS.

### Means for Solving the Problems

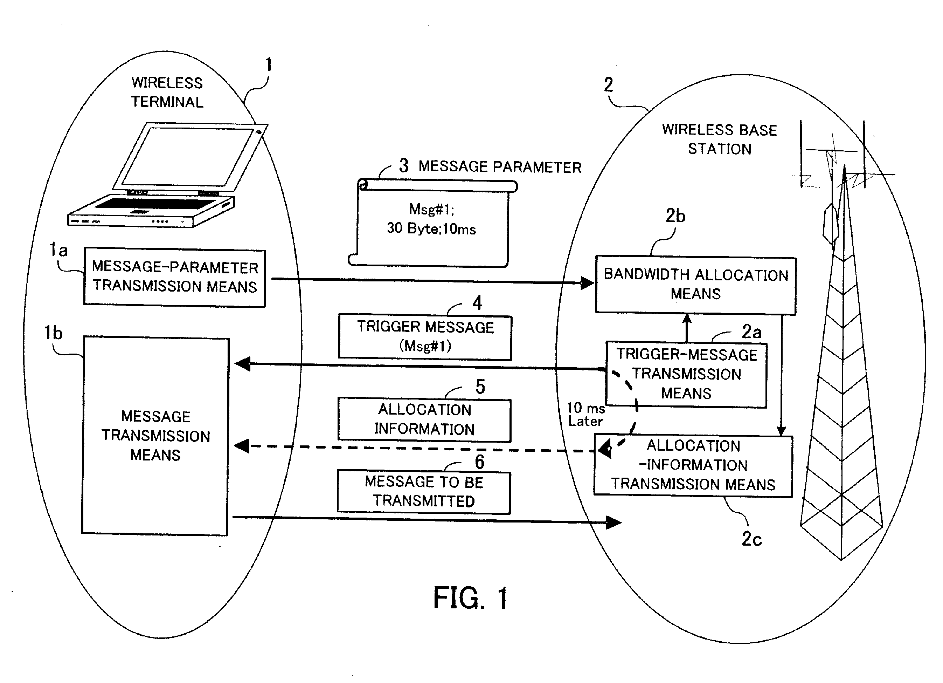

In order to accomplish the above object, according to the present invention, a message exchange method for communication between a wireless terminal 1 and a wireless base station 2 as illustrated in FIG. 1 is provided. The wireless terminal 1 transmits a message parameter 3 to the wireless base station 2. The message parameter 3 contains identification information identifying a trigger message 4 and a message size indicating the data length of a message 6 to be transmitted, where the message 6 to be transmitted is to be transmitted from the wireless terminal 1 to the wireless base station 2, and the trigger message 4 triggers transmission of the message 6 to be transmitted. Subsequently, the wireless base station 2 transmits the trigger message 4 to the wireless terminal 1, and thereafter allocates to the wireless terminal 1 a wireless bandwidth corresponding to the message size of the message 6 to be transmitted. Further, the wireless base station 2 transmits to the wireless terminal 1 allocation information 5 which indicates the allocated wireless bandwidth. Then, the wireless terminal 1 transmits the message 6 to be transmitted, to the wireless base station 2 by use of the wireless bandwidth indicated by the allocation information 5.

In the above message exchange method, when the wireless terminal 1 transmits the message parameter 3 to the wireless base station 2, the wireless base station 2 transmits the trigger message 4 to the wireless terminal 1. Thereafter, the wireless bandwidth corresponding to the message size of the message 6 to be transmitted is allocated to the wireless terminal 1. Further, the wireless base station 2 transmits the allocation information 5 to the wireless terminal 1. Then, the wireless terminal 1 transmits the message 6 to be transmitted, to the wireless base station 2.

### Advantage of the Invention

According to the present invention, the wireless base station is informed, in advance, of the identification information identifying the trigger message for the message to be transmitted and the message size of the message to be transmitted. Therefore, the wireless base station can allocate to the wireless terminal a wireless bandwidth for transmission of the message to be transmitted, without exchanging messages for bandwidth allocation after transmission of the trigger message. As a result, the communication efficiency in message exchange between the wireless terminal and the wireless base station is improved.

The above and other objects, features and advantages of the present invention will become apparent from the following description when taken in conjunction with the accompanying drawings which illustrate preferred embodiment of the present invention by way of example.

### Brief Description of Drawings

FIG. 1 is a diagram illustrating an outline of the present invention.
FIG. 2 is a diagram illustrating an example of a system configuration according to embodiments.
FIG. 3 is a block diagram illustrating the functions of a wireless base station (BS).
FIG. 4 is a block diagram illustrating the functions of a wireless terminal (MS).
FIG. 5 is a diagram illustrating data tables stored in a storage in the BS.
FIG. 6 is a diagram illustrating data tables stored in a storage in the MS.
FIG. 7 is a diagram indicating a sequence of messages exchanged when the MS starts an operation for connection to the BS in the first embodiment.
FIG. 8 is a diagram indicating a sequence of messages in the case where a plurality of error processing operations are combined.
FIG. 9 is a first flow diagram indicating operations performed by a controller in the BS.
FIG. 10 is a second flow diagram indicating operations performed by the controller in the BS.
FIG. 11 is a third flow diagram indicating operations performed by the controller in the BS.
FIG. 12 is a first flow diagram indicating operations performed by a controller in the MS.
FIG. 13 is a second flow diagram indicating operations performed by the controller in the MS.
FIG. 14 is a diagram illustrating the contents of the storage in the BS in the second embodiment.
FIG. 15 is a diagram illustrating the contents of the storage in the MS in the second embodiment.
FIG. 16 is a diagram indicating a sequence of messages exchanged when the MS starts an operation for connection to the BS in the second embodiment.
FIG. 17 is a state transition diagram of the BS.
FIG. 18 is a flow diagram indicating operations performed by the controller in the BS in the second embodiment.
FIG. 19 is a flow diagram indicating operations performed by the controller in the MS in the second embodiment.
FIG. 20 is a diagram illustrating the contents of the storage in the BS in the third embodiment.
FIG. 21 is a diagram indicating a sequence of messages exchanged when the MS starts an operation for connection to the BS in the third embodiment.
FIG. 22 is a flow diagram indicating operations performed by the MS when the MS receives a "UCD" message.
FIG. 23 is a flow diagram indicating operations performed by the MS after the MS transmits a CDMA Ranging Code until the MS transmits an "SBC-REQ" message.
FIG. 24 is a sequence diagram indicating an outline of a procedure for exchanging main MAC messages.
FIG. 25 is a sequence diagram indicating details of a procedure for exchanging messages for bandwidth allocation.

### Best Mode for Carrying Out the Invention

Hereinbelow, the embodiments of the present invention are explained with reference to drawings.

FIG. 1 is a diagram illustrating an outline of the present invention. As illustrated in FIG. 1, in the wireless communication system according to the present invention, messages are wirelessly exchanged between the wireless terminal 1 and the wireless base station 2.

The wireless terminal 1 comprises a message-parameter transmission means 1a and a message transmission means 1b. The message-parameter transmission means 1a transmits a message parameter 3 to the wireless base station 2. The message parameter 3 contains identification information identifying a trigger message 4, the message size indicating the data length of a message 6 to be transmitted, and a time of delay occurring after the wireless terminal 1 receives the trigger message 4 until preparations for transmission of the message 6 to be transmitted are completed, where the message 6 to be transmitted is to be transmitted from the wireless terminal 1 to the wireless base station 2, and the trigger message 4 triggers transmission of the message 6 to be transmitted. In the example of FIG. 1, the identification information identifying the trigger message 4 is "Msg#1," and the message size is 30 bytes, and the time of delay is 10 ms.

When the message transmission means 1b receives the trigger message 4 from the wireless base station 2, the message transmission means 1b starts preparation for transmission of the message 6 to be transmitted. In addition, when the message transmission means 1b receives allocation information 5 which indicates a wireless bandwidth allocated by the wireless base station 2, the message transmission means 1b transmits the message 6 to be transmitted, to the wireless base station 2 by use of the wireless bandwidth indicated by the allocation information 5. The wireless base station 2 comprises a trigger-message transmission means 2a, a bandwidth allocation means 2b, and an allocation-information transmission means 2c.

The trigger-message transmission means 2a transmits the trigger message 4 to the wireless terminal 1 in accordance with a predetermined message exchange sequence. When the bandwidth allocation means 2b receives the message parameter 3 from the wireless terminal 1, and the time of delay elapses since the transmission of the trigger message 4 by the trigger-message transmission means 2a, the bandwidth allocation means 2b allocates to the wireless terminal 1 the wireless bandwidth in correspondence with the message size of the message 6 to be transmitted. The allocation-information transmission means 2c transmits to the wireless terminal 1 the allocation information 5 indicating the wireless bandwidth allocated by the bandwidth allocation means 2b.

In the above wireless communication system, when the wireless terminal 1 transmits the message parameter 3 to the wireless base station 2, the wireless base station 2 transmits the trigger message 4 to the wireless terminal 1 in accordance with the message exchange sequence. When the time of delay elapses since the transmission of the trigger message 4, the wireless bandwidth corresponding to the message size of the message 6 to be transmitted is allocated to the wireless terminal 1. In addition, the wireless base station 2 transmits the allocation information 5 to the wireless terminal 1. Then, the wireless terminal 1 transmits the message 6 to be transmitted, to the wireless base station 2.

Thus, the wireless base station 2 can allocate to the wireless terminal 1 the wireless bandwidth for transmission of the message 6 to be transmitted, without exchanging messages for bandwidth allocation after transmission of the trigger message 4. As a result, the communication efficiency in message exchange between the wireless terminal 1 and the wireless base station 2 is improved.

Further, since the wireless base station 2 receives as the time of delay the time necessary for preparation for the transmission of the message 6 to be transmitted, the wireless base station 2 allocates the bandwidth after the time of delay elapses since the transmission of the trigger message 4. Therefore, the wireless terminal 1 can transmit the message 6 to be transmitted immediately after the wireless base station 2 allocates the bandwidth. As a result, it is possible to facilitate efficient use of the wireless bandwidth.

In the case where the above processing for the bandwidth allocation is performed when various messages to be transmitted are transmitted by the wireless terminal 1, it is possible to greatly reduce the time needed for requesting and allocating bandwidths used for the messages to be transmitted.

In the example of FIG. 1, the wireless base station 2 is informed of the timing of the start of the operation for bandwidth allocation by insertion of the time of delay in the message parameter 3. This is effective in the case where the time necessary for preparation for transmission of the message 6 to be transmitted by the wireless terminal 1 is fixed. In the case where the time necessary for preparation for transmission and reception of the message 6 to be transmitted is not fixed, the wireless terminal 1 may request bandwidth allocation by transmitting identification information which is unique to the wireless terminal 1 to the wireless base station. At this time, the amount of the wireless resource (bandwidth) to be allocated is determined according to the message size, of which the wireless base station 2 is informed by the wireless terminal 1 in advance.

Hereinbelow, details of the embodiments are explained for exemplary cases where the present invention is applied to wireless communications in accordance with the IEEE 802.16d/e standards.

### <First Embodiment>

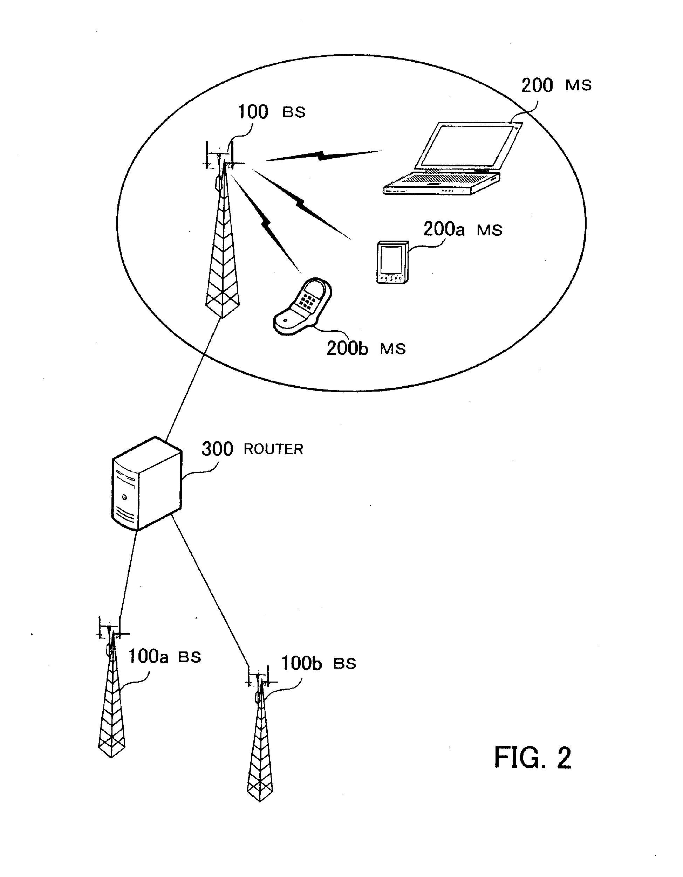

FIG. 2 is a diagram illustrating an example of a system configuration according to the first embodiment. The wireless communications according to the first embodiment are performed between the wireless base station (BS) 100 and a plurality of wireless terminals (MSs) 200, 200a, and 200b. The MSs 200, 200a, and 200b are located within the area covered by the BS 100. The BS 100 is connected to a router 300. The router 300 is further connected to the wireless base stations (BSs) 100, 100a, and 100b, and controls routing of data such as packet data which are received through the BSs 100, 100a, and 100b.

The communication method according to the first embodiment is explained below by taking as an example the communication between the BS 100 and the MS 200.

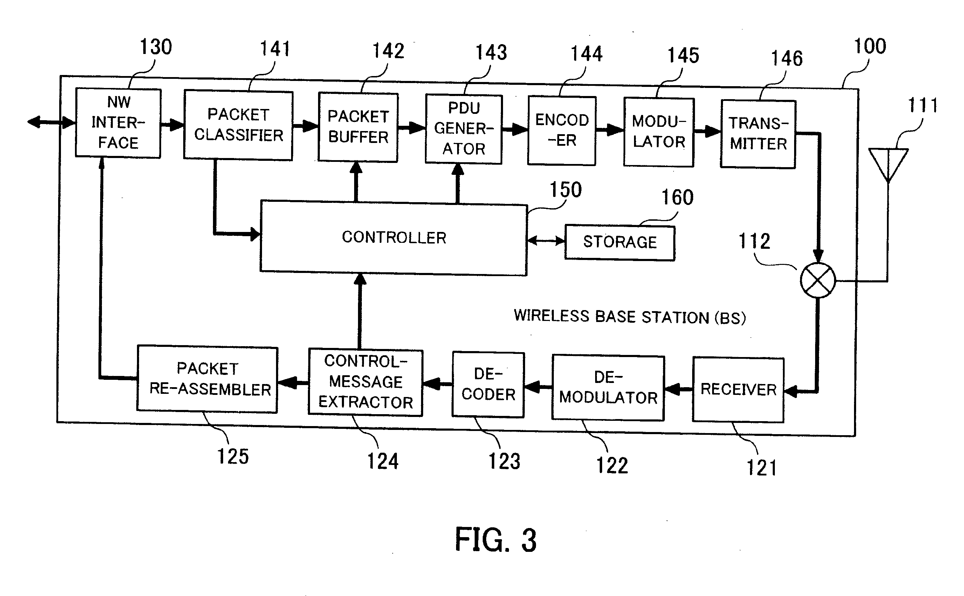

FIG. 3 is a block diagram illustrating the functions of the wireless base station (BS). The BS 100 has an antenna 111 and a duplexer 112. The antenna 111 is provided for transmitting and receiving wireless signals to and from wireless terminals, and the duplexer 112 is provided for commonly using the antenna 111 for transmission and reception.

A part of the BS 100 arranged for reception from the MS 200 comprises a receiver 121, a demodulator 122, a decoder 123, a control-message extractor 124, and a packet re-assembler 125.

The receiver 121 receives through the duplexer 112 signals inputted into the antenna 111, and passes the received signals to the demodulator 122. The demodulator 122 demodulates the received signals, and passes the demodulated signals to the decoder 123. The decoder 123 decodes the demodulated signals into decoded data, and passes the decoded data to the control-message extractor 124.

The control-message extractor 124 extracts control data from the decoded data, and passes the control data to a controller 150. In addition, the control-message extractor 124 transfers to the packet re-assembler 125 data (such as user data) other than the control data. The packet re-assembler 125 packetizes the data transferred from the control-message extractor 124, and passes the packetized data to an NW (network) interface 130.

The NW interface 130 is an interface provided for communication with the router 300. The NW interface 130 transmits a packet passed to the NW interface 130 by the packet re-assembler 125, to the router 300 through a network. When the NW interface 130 receives a packet from the router 300, the NW interface 130 passes the packet to a packet classifier 141.

A part of the BS 100 arranged for transmission to the MS comprises the packet classifier 141, a packet buffer 142, a PDU (Protocol Data Unit) generator 143, an encoder 144, a modulator 145, and a transmitter 146. The packet classifier 141 recognizes the IP (Internet Protocol) address of the destination contained in the packet received from the NW interface 130, and identifies the MS as the destination on the basis of the IP address. For example, the packet classifier 141 stores in advance in a memory a table (address table) in which the correspondences between the IP addresses and the IDs of the MSs are recorded. When the packet classifier 141 receives a packet, the packet classifier 141 refers to the address table, and acquires the ID of the destination MS (i.e., the MS corresponding to the destination IP address in the packet).

In addition, the packet classifier 141 acquires a QoS (Quality of Service) information corresponding to the ID of the destination MS when the packet classifier 141 receives the packet. For example, the packet classifier 141 stores in advance in the memory a table (QoS table) in which the correspondences between the QoS information items and the IDs of the MSs are recorded. When the packet classifier 141 receives a packet, the packet classifier 141 refers to the QoS table, and acquires the QoS information corresponding to the ID of the destination MS.

When the packet classifier 141 acquires the ID and the QoS information for the destination MS, the packet classifier 141 supplies to the controller 150 the ID and the QoS information for the destination MS and the data size, and sends out a request for bandwidth allocation. Then, the packet classifier 141 stores in the packet buffer 142 a packet passed to the packet classifier 141 by the NW interface 130. The packet buffer 142 temporarily holds the packet which is to be transmitted to the MS.

The PDU generator 143 acquires user data from the packet stored in the packet buffer 142 and control data from the controller 150 in accordance with an instruction from the controller 150 to transmit data. In addition, the PDU generator 143 generates a PDU by inserting data which is to be transmitted and is constituted by the user data and the control data, into a wireless frame, which is formed with a synchronization signal (preamble) as a reference. Then, the PDU generator 143 transmits the generated PDU to the encoder 144.

The encoder 144 performs processing for encoding (such as error-correcting coding) of the PDU received from the PDU generator 143. Then, the encoder 144 passes the encoded PDU data to the modulator 145. The modulator 145 modulates the PDU data received from the encoder 144, and passes the modulated PDU data to the transmitter 146. The transmitter 146 wirelessly transmits through the antenna 111 the modulated PDU data in the form of a wireless signal.

When the controller 150 receives from the packet classifier 141 a request for bandwidth allocation for the downlink traffic (in the direction from the BS to the MS), the controller 150 selects an MS for which a bandwidth is requested to be allocated, according to the QoS information. Then, the controller 150 instructs the packet buffer 142 and the PDU generator 143 to perform scheduling of transmission of the user data. In addition, the controller 150 also produces the control data, and passes the produced control data to the PDU generator 143.

In addition, the controller 150 allocates to the MS 200 an uplink bandwidth for the uplink traffic (in the direction from the MS to the BS) in response to a request for a bandwidth, which is received from the MS 200. Further, when the controller 150 transmits a message for triggering transmission of predetermined control data from the MS 200, and a predetermined time of delay is measured by a timer, the controller 150 automatically allocates an uplink bandwidth to the MS 200. Furthermore, when the controller 150 transmits the message for triggering the transmission, the controller 150 generates allocation information on the bandwidth allocation, and instructs the PDU generator 143 to transmit to the MS 200 control data containing the generated allocation information.

Moreover, the controller 150 performs processing of the received control data. For example, the controller 150 performs processing for registration, authentication, generation and exchange of a key, state management of wireless channels, and the like for the functions supported by the MS 200. A storage 160 is connected to the controller 150, and the controller 150 stores data necessary for various processing in the storage 160, and reads out the data from the storage 160.

The storage 160 stores various data which the BS 100 should store. For example, the storage 160 stores information on the functions of the MS 200, information on authentication, information on the key, information on the wireless channels, and the like, which are contained in the control data received from the MS 200, as well as management information on the status of use of the resources in the MS 200.

In addition, a TLV definition table and a transmission-trigger table are stored in advance in the storage 160. The TLV table stores definitions of TLV parameters, and the transmission-trigger table stores definitions of transmission triggers which trigger the bandwidth allocation. Further, when the MS 200 is connected, a bandwidth-allocation management table is stored in the storage 160 in association with the MS 200. In the bandwidth-allocation management table, the message size and the time of delay related to bandwidth allocation are defined. Details of the above tables stored in the storage 160 are explained later.

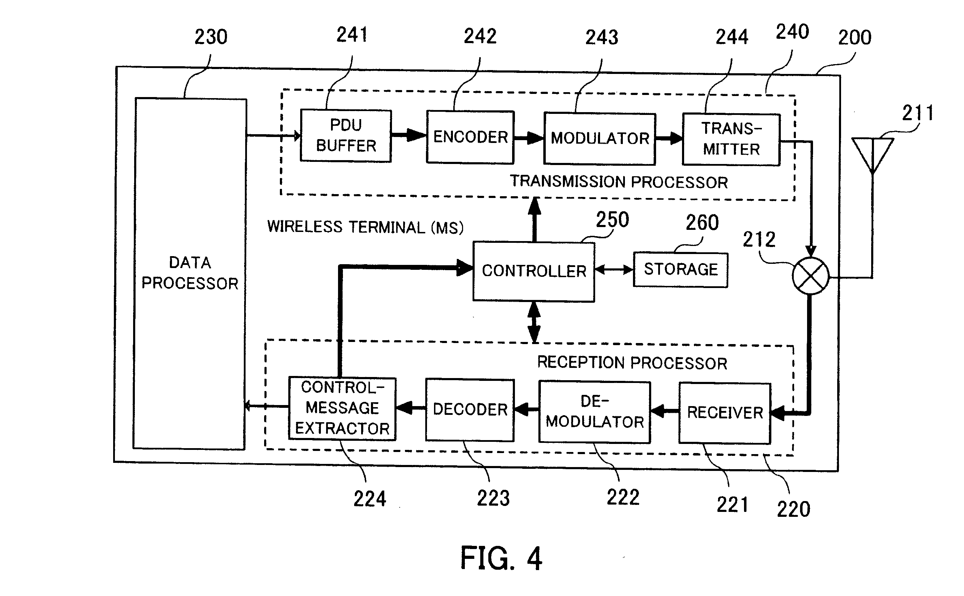

FIG. 4 is a block diagram illustrating the functions of a wireless terminal (MS). The MS 200 comprises an antenna 211 and a duplexer 212. The antenna 211 is provided for transmitting and receiving wireless signals to and from the BS 100, and the duplexer 212 is provided for commonly using the antenna 211 for transmission and reception.

The MS 200 comprises a reception processor 220, which includes a receiver 221, a demodulator 222, a decoder 223, and a control-message extractor 224.

The receiver 221 receives through the duplexer 212 signals inputted into the antenna 211, and passes the received signals to the demodulator 222. The demodulator 222 demodulates the received signals, and passes the demodulated signals to the decoder 223. The decoder 223 decodes the demodulated signals into decoded data, and passes the decoded data to the control-message extractor 224. The control-message extractor 224 extracts control data from the decoded data, and passes the control data to a controller 250. In addition, the control-message extractor 224 transfers to a data processor 230 data (such as user data) other than the control data.

The data processor 230 performs processing for displaying various data included in the received data, processing for outputting sound, and the like. In addition, the data processor 230 sends to a PDU buffer 241 user data which is desired to be transmitted to a destination device.

The transmission processor 240 comprises the PDU buffer 241, an encoder 242, a modulator 243, and a transmitter 244. The PDU buffer 241 holds data which is to be transmitted and is received from the data processor 230, and the PDU buffer 241 outputs the held data to the encoder 242 in accordance with an instruction from the controller 250.

The encoder 242 encodes the data which is to be transmitted and is received from the PDU buffer 241, under control of the controller 250, and the encoder 242 passes the data which is to be transmitted and is encoded, to the modulator 243. The modulator 243 performs processing for modulation of the data which is to be transmitted and is encoded, and passes the data which is to be transmitted and is modulated, to the transmitter 244. The transmitter 244 wirelessly transmits the data which is to be transmitted and is modulated, in the form of a wireless signal through the antenna 211.

The controller 250 performs processing of control data which are transmitted to or received from the BS 100. For example, the controller 250 performs processing for registration, authentication, generation and exchange of a key, state management of wireless channels, and the like for the functions supported by the MS 200. In addition, the controller 250 transmits user data or control data to the BS 100 by controlling the transmission processor 240 on the basis of the allocation information for an uplink bandwidth, which is transmitted from the BS 100. When bandwidth allocation is necessary, the controller 250 instructs the transmission processor 240 to transmit to the BS 100 a signal or a message for requesting the bandwidth allocation.

A storage 260 is connected to the controller 250. The controller 250 stores in the storage 260 data necessary for data processing, bandwidth allocation information transmitted from the BS 100, and the like.

The storage 260 stores data necessary for processing performed by the controller 250. In addition, the storage 260 stores a message-information management table, in which the message sizes and the times of delay are recorded for messages transmitted uplink from the MS 200 to the BS 100.

Next, the contents of the data tables stored in the storage 160 in the BS 100 and the storage 260 in the MS 200 are explained below.

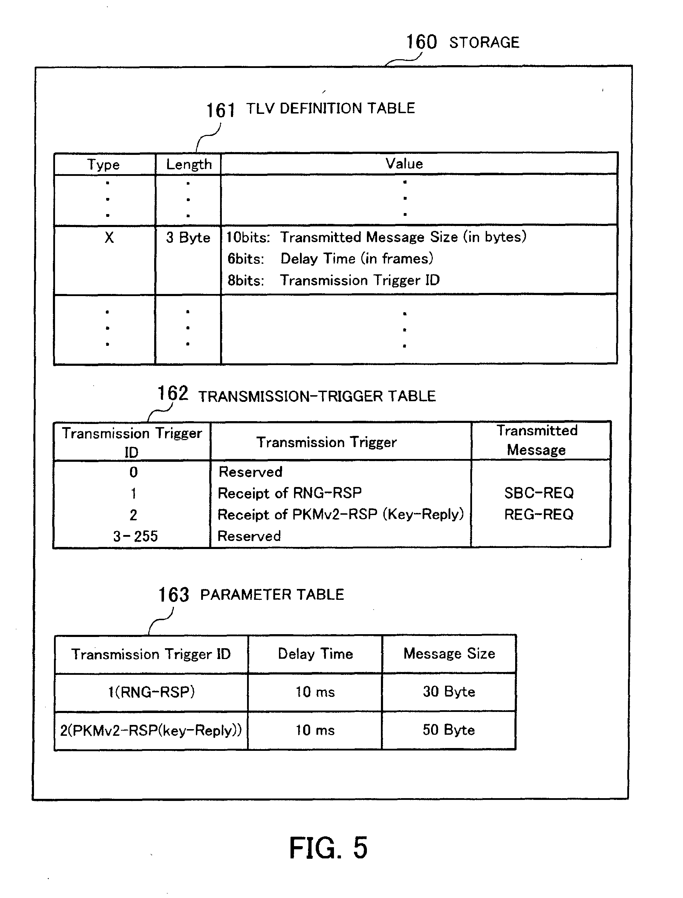

FIG. 5 is a diagram illustrating the data tables stored in the storage in the BS. The TLV definition table 161 and the transmission-trigger table 162 are stored in advance in the storage 160. In addition, when the MS 200 is connected, the controller 150 produces a parameter table 163, and stores the parameter table 163 in the storage 160. In FIG. 5, only the data tables which are necessary for bandwidth allocation are indicated among the information stored in the storage 160. That is, in practice, the storage 160 further stores various data which are not indicated in FIG. 5.

The TLV definition table 161 has the columns of "Type," "Length," and "Value." The information items arranged along each row are related to each other, and constitute a data structure of a TLV parameter of a type. For example, one type of TLV parameter defined in the TLV definition table 161 is a TLV parameter for transmission of bandwidth allocation information.

The data type of the information indicated in the column "Value" is indicated in the column "Type." The data length of the information indicated in the column "Value" is indicated in the column "Length." The data length of the information indicated in the column "Value" of the TLV parameter for transmission of bandwidth allocation information is three bytes. The information which is actually transmitted as the value of the TLV parameter is indicated in the column "Value." In the value of the TLV parameter for transmission of bandwidth allocation information, the size of the message to be transmitted is indicated (in bytes) in the leading ten bits, the time of delay is indicated (in frames) in the subsequent six bits, and the transmission trigger ID is indicated in the remaining eight bits. The transmission trigger ID is identification information for identifying a trigger (transmission trigger) which indicates the timing of transmission of predetermined control data by the MS 200.

The transmission-trigger table 162 has the columns of "Transmission Trigger ID," "Transmission Trigger," and "Transmitted Message."

The identification information (transmission trigger ID) assigned to each transmission trigger is set in the column "Transmission Trigger ID." The event which triggers transmission of control data by the MS 200 is set in the column "Transmission Trigger." The type of the message to be transmitted from the MS 200 in response to each transmission trigger is set in the column "Transmitted Message."

In the example of FIG. 5, the reception of the "RNG-RSP" message is set as the transmission trigger in correspondence with the transmission trigger ID "1." When the MS 200 receives the "RNG-RSP" message, the MS 200 transmits an "SBC-REQ" message to the BS 100. In addition, the reception of the "PKMv2-RSP (Key-Reply)" message is set as the transmission trigger in correspondence with the transmission trigger ID "2." When the MS 200 receives the "PKMv2-RSP (Key-Reply)" message, the MS 200 transmits a "REG-REQ" message to the BS 100.

The parameter table 163 has the columns of "Transmission Trigger ID," "Delay Time," and "Message Size." The trigger ID indicating an event (message reception) which triggers transmission of a message by the MS 200 is set in the column "Transmission Trigger ID." The minimum value of the time of delay occurring until preparations for transmission of the message to be transmitted by the MS 200 in response to the transmission trigger indicated by the transmission trigger ID are completed is set in the column "Delay Time." The amount of the data of the message which is to be transmitted by the MS 200 in response to the transmission trigger indicated by the transmission trigger ID is set in the column "Message Size."

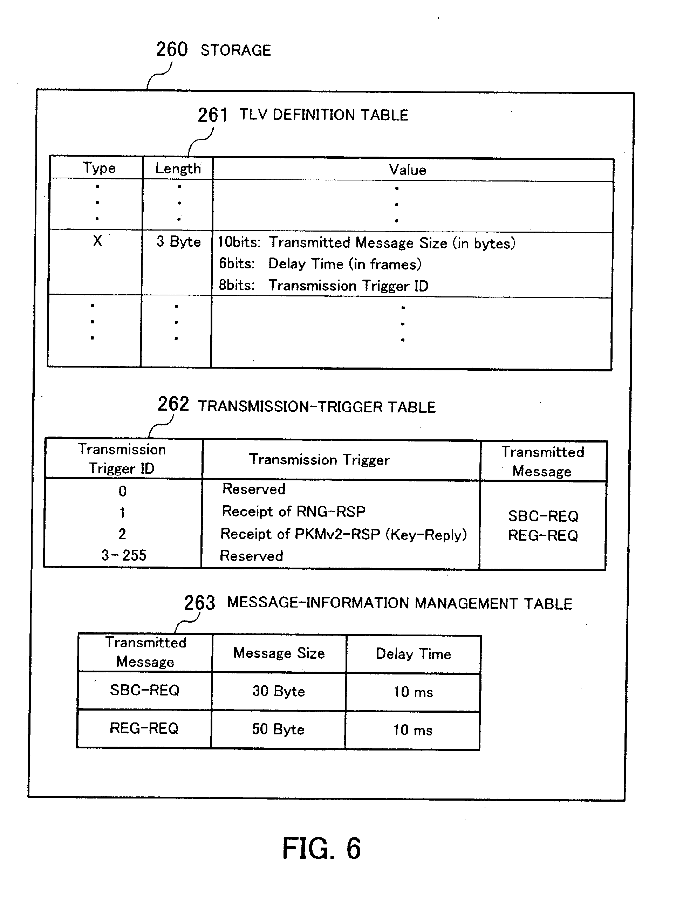

FIG. 6 is a diagram illustrating a data table stored in the storage in the MS. The storage 260 in the MS 200 stores a TLV definition table 261, a transmission-trigger table 262, and the message-information management table 263.

The data structure of the TLV definition table 261 and the data recorded in the TLV definition table 261 are identical to the TLV definition table 161 stored in the storage 160 in the BS 100. In addition, the data structure of the transmission-trigger table 262 and the data recorded in the transmission-trigger table 262 are identical to the transmission-trigger table 162 stored in the storage 160 in the BS 100.

The message-information management table 263 has the columns of "Transmitted Message," "Message Size," and "Delay Time." When an "RNG-REQ" message is received from the MS 200, predetermined data contained in the "RNG-REQ" message are recorded in the message-information management table 263.

The type of the message transmitted by the MS 200 in response to each transmission trigger is set in the column "Transmitted Message." The size of each message transmitted from the MS 200 is set (in bytes) in the column "Message Size." The time of delay of each message transmitted from the MS 200 is set in the column "Delay Time." The time of delay of each message is the minimum value of the time necessary after the MS 200 receives a transmission trigger until the MS 200 transmits the corresponding message. This means that the MS 200 does not transmit a predetermined message until the time of delay elapses after the BS 100 transmits a message as a transmission trigger. Therefore, it is sufficient for the BS 100 to allocate a bandwidth to the MS 200 when the time of delay elapses since the transmission of a message as a transmission trigger.

Since the BS 100 and the MS 200 are configured as above, it is possible to efficiently uplink control data from the MS 200 to the BS 100.

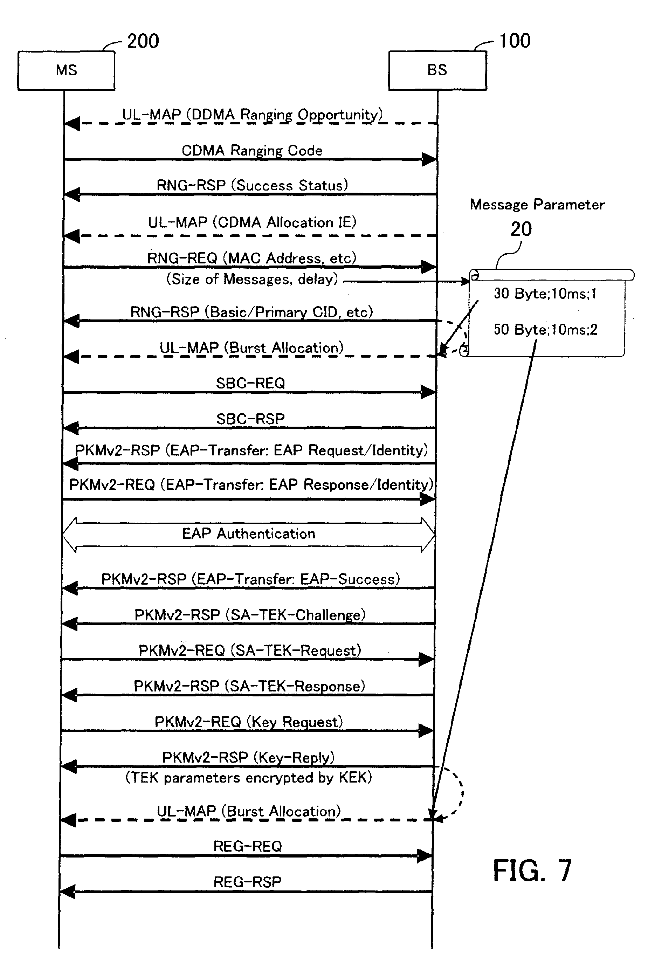

FIG. 7 is a diagram indicating a sequence of messages exchanged when the MS starts an operation for connection to the BS in the first embodiment. In FIG. 7, the exchanged messages are indicated by arrow lines, the types of the messages are indicated above the arrow lines, and the data contained in the messages are indicated in parentheses following the types of the messages. In addition, the signals and messages for requesting and allocating a bandwidth are indicated by dashed lines, and the main messages for exchanging information on authentication and the like between the MS 200 and the BS 100 are indicated by solid lines.

Further, the curved dashed lines shown on the BS 100 side with arrows each indicate processing for allocation of a bandwidth, and extend from a message causing the processing for bandwidth allocation to a message informing the MS 200 of details of the bandwidth allocation. As indicated in FIG. 7, a plurality of messages are exchanged when the MS 200 starts the operation for connection of the MS 200 to the BS 100 (i.e., the operation for network entry). At this time, the order of exchange of the messages (i.e., the message exchange sequence) is predetermined.

First, the main messages exchanged when the MS 200 starts the operation for connection of the MS 200 to the BS 100 are explained below with reference to FIG. 7. When a request for connection to the BS 100 is inputted into the MS 200 by a user's manual operation, the MS 200 transmits the CDMA Ranging Code to the BS 100. Then, the BS 100 transmits an "RNG-RSP (Success Status)" message to the MS 200.

Subsequently, the MS 200 transmits an "RNG-REQ (MAC Address, etc)" message to the BS 100. In response to the "RNG-REQ (MAC Address, etc)" message, the BS 100 registers the MAC address of the MS 200. Then, the BS 100 allocates a Basic CID and a Primary CID and transmits an "RNG-RSP (Basic/Primary CID, etc)" message to the MS 200.

After that, the MS 200 transmits an "SBC-REQ" message to the BS 100. In response to the "SBC-REQ" message, the BS 100 transmits an "SBC-RSP" message to the MS 200. Thus, negotiations for the authentication technique and the functions in the physical layer which are used in the communication are performed, where the functions in the physical layer include the modulation technique, the error-correcting coding technique, the H-ARQ technique, and the like which are supported.

Thereafter, the BS 100 performs authentication, and determines whether or not to permit the connection by exchanging the PKM-REQ message and the PKM-RSP message multiple times. When the authentication of the MS 200 succeeds and the connection is possible, the MS 200 transmits an "REG-REQ" message to the BS 100. In response to the "REG-REQ" message, the BS 100 transmits an "REG-RSP" message to the MS 200. Thus, negotiations for functional parameters and the like for setting up a connection for data transfer are performed as above.

In principle, bandwidth allocation by the BS 100 is necessary every time an uplink message is transmitted from the MS 200 to the BS 100 during the exchange of the main messages, although the CDMA Ranging Code can be transmitted by use of a bandwidth which can be used by all the MSs since the MS 200 receives the "UL-MAP (DDMA Ranging Opportunity)" message from the BS 100 in advance.

Each message transmitted from the MS 200 other than the CDMA Ranging Code is transmitted by using a bandwidth uniquely allocated to the MS 200 by the BS 100. In order to allocate the bandwidth to the MS 200, the BS 100 is required to recognize the size and the time of delay of the message to be transmitted from the MS 200.

That is, in order to realize efficient use of the communication bandwidth, it is necessary to allocate to each MS the minimum bandwidth necessary for message transmission, for the shortest possible time. Therefore, in the case where a certain time is necessary for preparation for transmission of a message by the MS 200, the BS 100 allocates a bandwidth to the MS 200 after the time necessary for the preparation for transmission elapses. Thus, it is possible to minimize the time since allocation of a bandwidth until transmission of a message by use of the bandwidth. In addition, allocation of the minimum necessary bandwidth to the MS 200 can be realized by allocating a bandwidth according to the size of the message to be transmitted by the MS 200.

When the MS 200 receives a "RNG-RSP (Success Status)" message, the MS 200 transmits a "RNG-REQ (MAC Address, etc)" message. It is known that preparations for the transmission of the "RNG-REQ (MAC Address, etc)" message can be completed in the minimum time of delay. In addition, the message size of the "RNG-REQ (MAC Address, etc)" message is also known from the standard. That is, the BS 100 knows in advance the message size of the "RNG-REQ (MAC Address, etc)" message and the time of delay for the preparation for the transmission of the "RNG-REQ (MAC Address, etc)" message. Therefore, the BS 100 can allocate a bandwidth to the MS 200, and transmit a "UL-MAP (CDMA Allocation IE)" message to the MS 200 immediately after the transmission of the "RNG-RSP (Success Status)" message from the BS 100. However, the message sizes and the times of delay of the other main messages transmitted from the MS 200 to the BS 100 are different for each MS. Therefore, conventionally, more than one message is required to be exchanged for bandwidth allocation as indicated in FIG. 24.

Consider the contents of the main messages transmitted from the MS 200 to the BS 100. For some of the main messages transmitted from the MS 200 to the BS 100, the message size and the time of delay can be defined as fixed values in advance in the MS 200. Specifically, the "SBC-REQ" message (which is transmitted by the MS 200 after the MS 200 receives an "RNG-RSP" message containing the "Basic/Primary CID" and the like) and the "REG-REQ" message (which is transmitted by the MS 200 after authentication succeeds and the MS 200 receives a "PKM-RSP" message representing a key exchange) are messages containing information unique to the MS 200 and having a predetermined message size. In addition, the "SBC-REQ" message or the "REG-REQ" message can be transmitted without necessity of complicated processing after the reception of the "RNG-RSP" or "PKM-RSP" message. Therefore, the preparations for transmission of the "SBC-REQ" message or the "REG-REQ" message can be completed with minimum delay.

In consideration of the above situation, according to the present embodiment, the MS 200 inserts information recorded in the message-information management table 263 into a message which is transmitted to the BS 100 before the MS 200 receives the first message which becomes a transmission trigger (i.e., the "RNG-RSP (Basic/Primary CID, etc)" message). That is, the MS 200 transmits to the BS 100 an "RNG-REQ" message containing a message parameter 20, which includes the message sizes of the "SBC-REQ" message and the "REG-REQ" message, the time of delay occurring after the MS 200 receives the "RNG-RSP (Basic/Primary CID, etc)" message until the MS 200 becomes ready to transmit the "SBC-REQ" message, and the time of delay occurring after the MS 200 receives the "PKMv2-RSP (Key-Reply)" message until the MS 200 becomes ready to transmit the "REG-REQ" message. Then, the BS 100 produces the parameter table 163 on the basis of the message parameter, and stores the parameter table 163 in the storage 160.

The BS 100 allocates to the MS 200 a bandwidth for transmission of each of the "SBC-REQ" message and the "REG-REQ" message at an appropriate time on the basis of the parameter table 163. Specifically, the BS 100 waits the time of delay for the "SBC-REQ" message after the BS 100 transmits the "RNG-RSP (Basic/Primary CID, etc)" message, allocates a bandwidth corresponding to the message size of the "SBC-REQ" message, and transmits an "UL-MAP (Burst Allocation)" message to the MS 200. Further, the BS 100 waits the time of delay for the "REG-REQ" message after the BS 100 transmits the "PKMv2-RSP (Key-Reply)" message, allocates a bandwidth corresponding to the message size of the "REG-REQ" message, and transmits an "UL-MAP (Burst Allocation)" message to the MS 200.

As explained above, the number of messages exchanged for bandwidth allocation can be reduced, so that the communication efficiency in the operation for connection of the MS 200 to the BS 100 can be increased.

In the example of FIG. 7, it is assumed that all the messages normally reach the destination. However, in some environments of the MS 200 during the wireless communication, the possibility that some messages cannot be normally received is not ignorable.

According to the present embodiment, the messages are transmitted and received at predetermined timings. Therefore, in the case where a message is not received at a predetermined timing, it is possible to immediately detect that the message does not normally reach the destination. Thus, a measure such as retransmission can be quickly taken.

Specifically, in the case where the BS 100 cannot receive the "SBC-REQ" message at the timing at which the "SBC-REQ" message is to be received, the BS 100 performs one of the following error processing operations.
(a) Retransmission of a main message which is precedingly transmitted toward the MS 200
(b) Reallocation of a bandwidth
(c) Ranging processing (adjustment of transmission parameters of the MS 200)

According to the present embodiment, the error processing to be performed is determined according to the error.

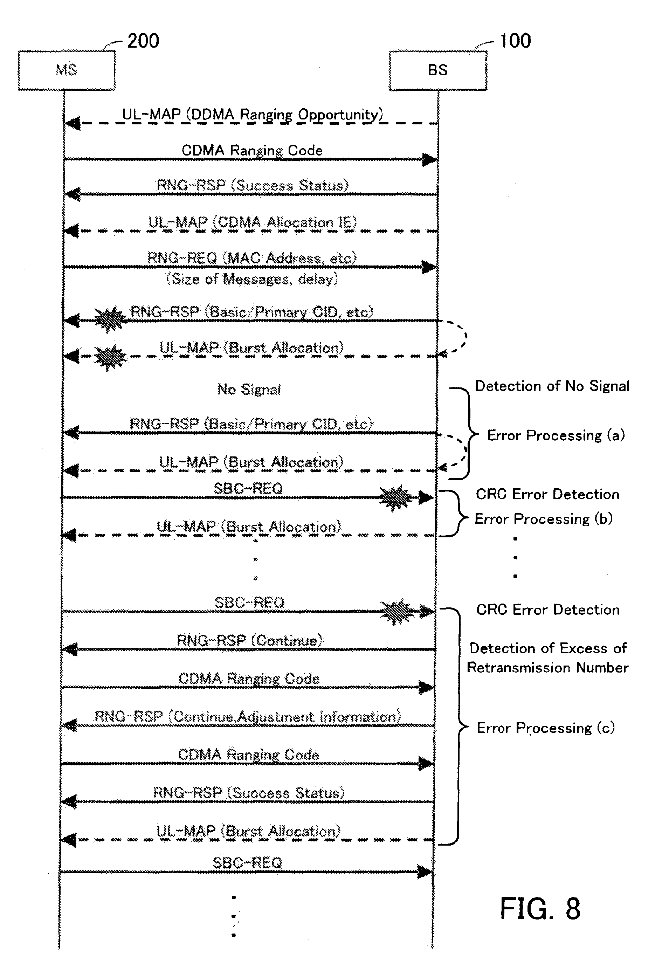

FIG. 8 is a diagram indicating a sequence of messages in the case where a plurality of error processing operations is combined. When the BS 100 receives the "RNG-REQ" message from the MS 200, the BS 100 transmits an "RNG-RSP" message to the MS 200. When a predetermined time elapses since the transmission of the "RNG-RSP" message, the BS 100 transmits to the MS 200 a "UL-MAP" message containing information for allocating a wireless resource for transmitting the "SBC-REQ" message. In the example of FIG. 8, it is assumed that the "RNG-RSP" message and the "UL-MAP" message cannot be normally received by the MS 200.

In the above case, since the MS 200 cannot normally receive the responses (the "RNG-RSP" message and the "UL-MAP" message) from the BS 100, the MS 200 cannot recognize that the BS 100 allocates a wireless resource to the MS 200, so that the wireless resource allocated to the MS 200 by the BS 100 is not used.

The BS 100 detects that no signal is transmitted to the wireless resource allocated to the MS 200 (i.e., the BS 100 detects the "No Signal" state). Specifically, the BS 100 detects the "No Signal" state when the BS 100 does not receive a signal from the MS 200 even after a preset time elapses since the allocation of a bandwidth to the MS 200. When the BS 100 detects the "No Signal" state, the BS 100 cannot determine whether or not the message which is precedingly transmitted reaches the MS 200.

Therefore, the BS 100 performs the aforementioned error processing operation (a). That is, the BS 100 performs retransmission of the "RNG-RSP" message, reallocation of a bandwidth to the MS 200, and transmission of a "UL-MAP" message. At this time, the BS 100 increments a retransmission number counter by one.

When the MS 200 receives the retransmitted "RNG-RSP" message and the transmitted "UL-MAP" message indicating details of the reallocation of the bandwidth, the MS 200 transmits the "SBC-REQ" message to the BS 100 by use of the allocated wireless resource. However, in this example, it is assumed that the BS 100 detects a CRC (Cyclic Redundancy Check) error in the "SBC-REQ" message at this time. When the BS 100 detects a CRC error, the BS 100 can recognize that the MS 200 transmits some message by use of the bandwidth allocated to the MS 200, and determine that the preceding "RNG-RSP" message and "UL-MAP" message normally reach the MS 200.

In the above situation, the BS 100 performs the aforementioned error processing operation (b). That is, when the BS 100 detects that the BS 100 cannot normally receive the "SBC-REQ" message because of the CRC error, the BS 100 reallocates a bandwidth to the MS 200, and retransmits a "UL-MAP" message to the MS 200. At this time, the BS 100 increments the retransmission number counter by one.

When the MS 200 does not receive the "SBC-RSP" message and receives the bandwidth allocation, the MS 200 determines that the BS 100 cannot normally receive the "SBC-REQ" message. Therefore, the MS 200 retransmits the "SBC-REQ" message. If the retransmitted "SBC-REQ" message cannot be normally received, and a CRC error occurs, the BS 100 performs the aforementioned error processing operation (b) again. That is, a bandwidth is reallocated to the MS 200, a "UL-MAP" message is retransmitted to the MS 200, and the retransmission number counter is incremented by one.

The maximum retransmission number is stored in advance in the storage 160 in the BS 100. Every time the BS 100 detects an error, the controller 150 compares the value of the retransmission number counter with the maximum retransmission number. When the value of the retransmission number counter is equal to or greater than the maximum retransmission number, the BS 100 performs the aforementioned error processing operation (c). That is, the BS 100 transmits to the MS 200 an "RNG-RSP" message containing the Continue Status, and prompts the MS 200 to transmit the CDMA Ranging Code for adjustment of the transmission parameters (of the transmission power, frequency, and timing).

When the MS 200 receives the RNG-RSP" message containing the Continue Status, the MS 200 transmits the CDMA Ranging Code to the BS 100. When the BS 100 receives the CDMA Ranging Code, the BS 100 determines whether or not the reception power, frequency, and timing in the CDMA Ranging Code are within specified ranges. In the case where one or more of the reception power, frequency, and timing in the CDMA Ranging Code are outside one or more of the specified ranges, the BS 100 transmits to the MS 200 an "RNG-RSP" message containing one or more adjustment values for the one or more of the transmission parameters, and prompts the MS 200 to transmit the CDMA Ranging Code again.

When the MS 200 receives the "RNG-RSP" message containing the one or more adjustment values for the one or more of the transmission parameters, the MS 200 performs the instructed adjustment, and thereafter transmits the CDMA Ranging Code to the BS 100. When the BS 100 receives the CDMA Ranging Code, the BS 100 determines whether or not the reception power, frequency, and timing in the CDMA Ranging Code are within specified ranges. In the case where the reception power, frequency, and timing in the CDMA Ranging Code are within the specified ranges, the BS 100 transmits to the MS 200 an "RNG-RSP" message containing the Success Status. Then, the BS 100 allocates a bandwidth to the MS 200 for transmission of an "SBC-REQ" message, and transmits an "UL-MAP (Burst Allocation)" message to the MS 200.

As explained above, a highly reliable message exchange can be realized by combining the plurality of error processing operations.

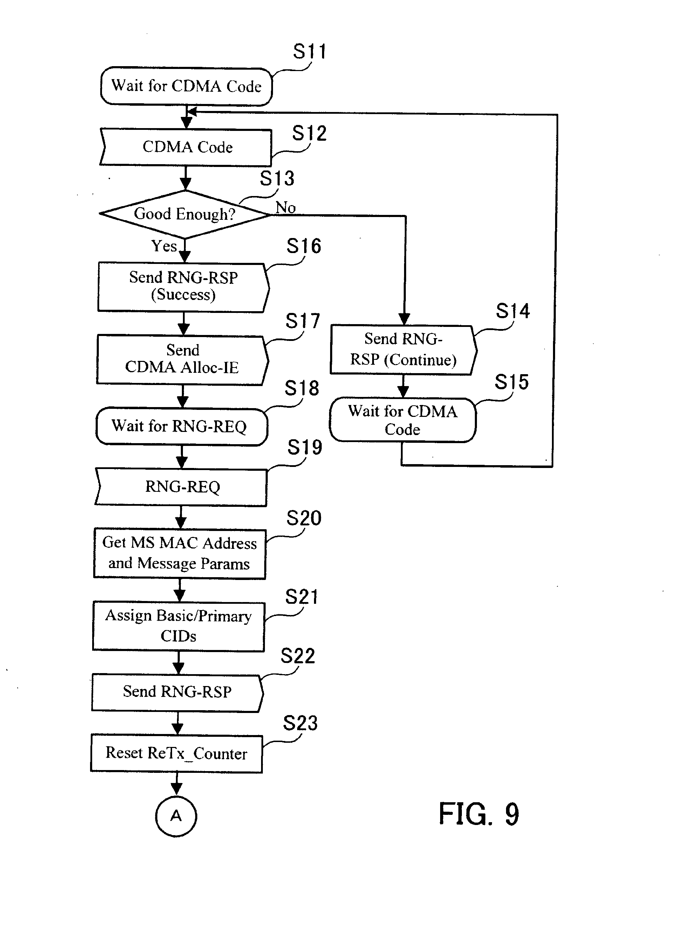

Next, sequences of operations performed by the controller 150 in the BS 100 and the controller 250 in the MS 200 for realizing the processing indicated in FIGS. 7 and 8 are explained in detail. First, the operations performed by the controller 150 from the acquisition of the CDMA Ranging Code to the transmission of the "SBC-RSP" message are explained below with reference to FIGS. 9 to 11.

FIG. 9 is a first flow diagram indicating operations performed by the controller in the BS. The operations of FIG. 9 are explained below step by step.

<Step S11> The controller 150 waits for transmission of the CDMA Ranging Code from the MS 200. (That is, the controller 150 goes into a wait state.)

<Step S12> The controller 150 receives and acquires the CDMA Ranging Code.

<Step S13> The controller 150 determines whether or not the reception power, frequency, and timing in the CDMA Ranging Code are within the specified ranges. When yes is determined, the operation goes to step S16. When no is determined, the operation goes to step S14.

<Step S14> The controller 150 transmits to the MS 200 the "RNG-RSP" message containing the Continue Status.

<Step S15> The controller 150 waits for transmission of the CDMA Ranging Code from the MS 200. (That is, the controller 150 goes into a wait state.) Thereafter, the operation goes to step S12.

<Step S16> In the case where the values of the CDMA Ranging Code are within the specified ranges, the controller 150 transmits to the MS 200 the "RNG-RSP" message containing the Success Status.

<Step S17> The controller 150 allocates to the MS 200 a bandwidth necessary for transmission of the "RNG-REQ (MAC Address, etc)" message, and transmits the "UL-MAP (CDMA Allocation IE)" message to the MS 200.

<Step S18> The controller 150 waits for transmission of the "RNG-REQ (MAC Address, etc)" message from the MS 200. (That is, the controller 150 goes into a wait state.)

<Step S19> The controller 150 receives the "RNG-REQ (MAC Address, etc)" message.

<Step S20> The controller 150 acquires the MAC address and message parameter of the MS 200 from the received message. The controller 150 refers to the TLV definition table 161 (as indicated in FIG. 5), and interprets the message parameter. The message parameter includes the message sizes of the "SBC-REQ" message and the "REG-REQ" message, the time of delay occurring after the MS 200 receives the "RNG-RSP (Basic/Primary CID, etc)" message until the MS 200 becomes ready to transmit the "SBC-REQ" message, and the time of delay occurring after the MS 200 receives the "PKMv2-RSP (Key-Reply)" message until the MS 200 becomes ready to transmit the "REG-REQ" message. Then, the controller 150 produces the parameter table 163 (as indicated in FIG. 5) on the basis of the message parameter, and stores the parameter table 163 in the storage 160.

<Step S21> The controller 150 allocates the Basic CID and the Primary CID to the MS 200.

<Step S22> The controller 150 transmits the "RNG-RSP (Basic/Primary CID, etc)" message to the MS 200.

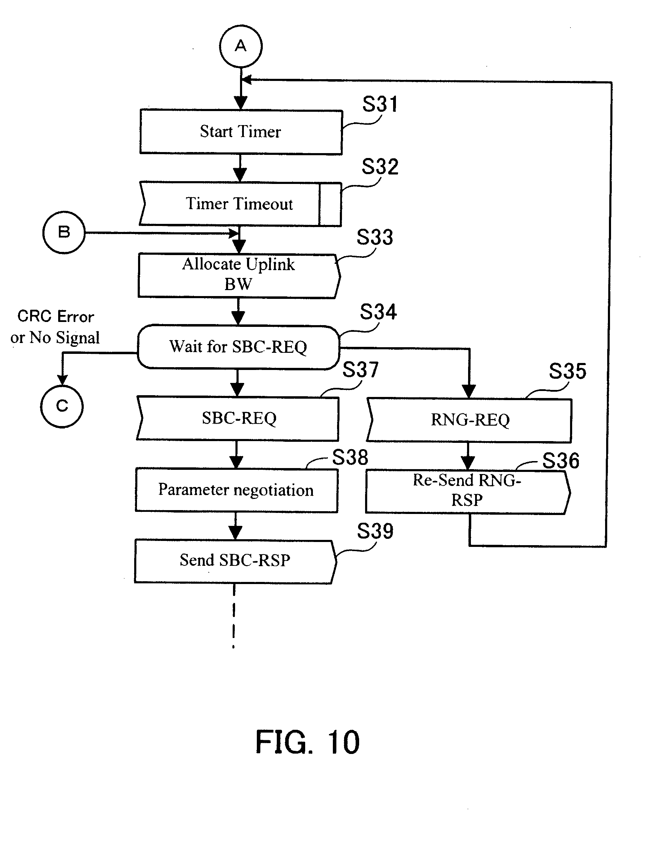

<Step S23> The controller 150 refers to the transmission-trigger table 162 (as indicated in FIG. 5), and recognizes that the reception of the "RNG-RSP" message realizes a transmission trigger for a message by the MS 200. Specifically, in step S23, the controller 150 resets the value of the retransmission number counter to "0." Thereafter, the operation goes to step S31 (in FIG. 10).

FIG. 10 is a second flow diagram indicating operations performed by the controller in the BS. The operations of FIG. 10 are explained below step by step.

<Step S31> The controller 150 starts a timer for measuring a waiting time.

<Step S32> The controller 150 detects an expiration of a time in the timer. Specifically, the controller 150 refers to the transmission-trigger table 162, and acquires the transmission trigger ID "1" in the "RNG-RSP (Basic/Primary CID, etc)" message transmitted in step S22. Then, the controller 150 refers to the parameter table 163, and acquires the time of delay "10 ms" associated with the acquired transmission trigger ID. Subsequently, the controller 150 compares the acquired time of delay "10 ms" with the value of the timer, and determines the expiration when the value of the timer becomes equal to or greater than the time of delay.

<Step S33> The controller 150 allocates a bandwidth to the MS 200. At this time, the controller 150 refers to the parameter table 163, and acquires the message size associated with the transmission trigger ID "1" acquired in step S32. Then, the controller 150 allocates to the MS 200 a wireless bandwidth corresponding to the acquired message size. Subsequently, the controller 150 transmits the "UL-MAP (Burst Allocation)" message to the MS 200.

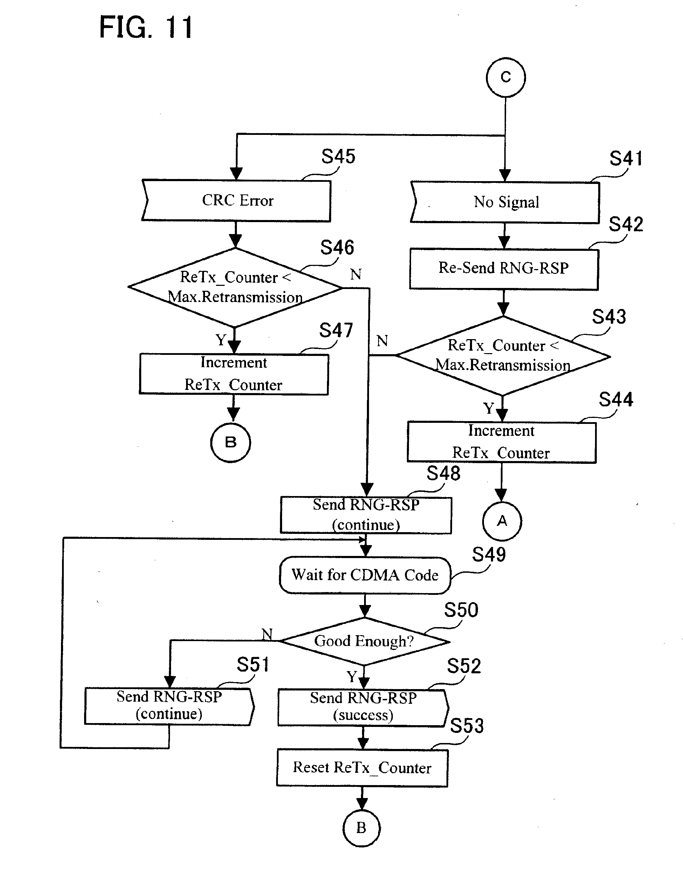

<Step S34> The controller 150 waits for transmission of the "SBC-REQ" message from the MS 200. When the BS 100 receives the "RNG-REQ" message from the MS 200, the operation goes to step S35. When the BS 100 receives the "SBC-REQ" message from the MS 200, the operation goes to step S37. In the case where the BS 100 cannot receive a message from the MS 200, the "No Signal" state is determined, and the operation goes to step S41 (indicated in FIG. 11). In the case where a CRC error occurs in a message received from the MS 200, the operation goes to step S45 (indicated in FIG. 11).

<Step S35> The controller 150 acquires the "RNG-REQ" message.

<Step S36> The controller 150 retransmits to the MS 200 the "RNG-RSP" message containing the Basic/Primary CID. Thereafter, the operation goes to step S31.

<Step S37> The controller 150 acquires the "SBC-REQ" message.

<Step S38> The controller 150 performs negotiations for the authentication technique and the functions in the physical layer which are used in communications, where the functions in the physical layer include the modulation technique, the error-correcting coding technique, the H-ARQ technique, and the like which are supported.

<Step S39> The controller 150 transmits the "SBC-RSP" message to the MS 200. Thereafter, messages are exchanged between the BS 100 and the MS 200 as indicated in FIG. 7.

FIG. 11 is a third flow diagram indicating operations performed by the controller in the BS. In FIG. 11, a sequence of error processing is indicated. The operations of FIG. 11 are explained below step by step.

<Step S41> In the case where no message is transmitted by use of the bandwidth allocated to the MS 200 for a predetermined time, the controller 150 determines that the allocated bandwidth is in the "No Signal" state.

<Step S42> The controller 150 retransmits to the MS 200 the "RNG-RSP" message containing the Basic/Primary CID.

<Step S43> The controller 150 compares the value of the retransmission number counter with the maximum retransmission number (which is preset). When the value of the retransmission number counter is smaller than the maximum retransmission number, the operation goes to step S44. When the value of the retransmission number counter is equal to or greater than the maximum retransmission number, the operation goes to step S48.

<Step S44> The controller 150 increments the value of the retransmission number counter. Thereafter, the operation goes to step S31.

<Step S45> The controller 150 detects occurrence of a CRC error in the message received from the MS 200.

<Step S46> The controller 150 compares the value of the retransmission number counter with the maximum retransmission number (which is preset). When the value of the retransmission number counter is smaller than the maximum retransmission number, the operation goes to step S47. When the value of the retransmission number counter is equal to or greater than the maximum retransmission number, the operation goes to step S48.

<Step S47> The controller 150 increments the value of the retransmission number counter. Thereafter, the operation goes to step S33.

<Step S48> The controller 150 transmits to the MS 200 the "RNG-RSP" message containing the Continue Status.

<Step S49> The controller 150 waits for transmission of the CDMA Ranging Code from the MS 200. Thereafter, the controller 150 acquires the CDMA Ranging Code from the MS 200.

<Step S50> The controller 150 determines whether or not the reception power, frequency, and timing in the CDMA Ranging Code are within the specified ranges. In the case where the values of the CDMA Ranging Code are within the specified ranges, the operation goes to step S52. In the case where one or more of the values of the CDMA Ranging Code are outside one or more of the specified ranges, the operation goes to step S51.

<Step S51> The controller 150 transmits to the MS 200 the "RNG-RSP" message containing one or more adjustment values for the one or more of the transmission parameters. Thereafter, the operation goes to step S49.

<Step S52> The controller 150 transmits to the MS 200 the "RNG-RSP" message containing the Success Status.

<Step S53> The controller 150 resets the value of the retransmission number counter to "0." Thereafter, the operation goes to step S33.

Next, the operations performed by the controller 250 in the MS 200 are explained in detail below with reference to flow diagrams.

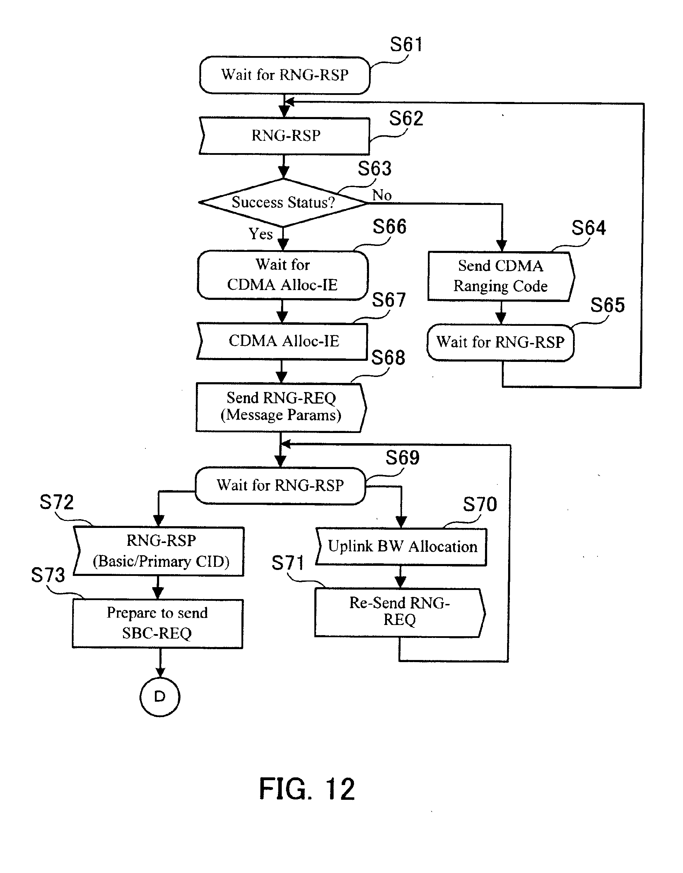

FIG. 12 is a first flow diagram indicating operations performed by the controller in the MS. FIG. 12 indicates the operations following the transmission of the CDMA Ranging Code. The operations of FIG. 12 are explained below step by step.

<Step S61> The controller 250 waits for transmission of the "RNG-RSP" message from the BS 100.

<Step S62> The controller 250 acquires the "RNG-RSP" message transmitted from the BS 100.

<Step S63> The controller 250 determines whether or not the "RNG-RSP" message transmitted from the BS 100 indicates the Success Status. When yes is determined, the operation goes to step S66. When no is determined, the operation goes to step S64.

<Step S64> The controller 250 transmits the CDMA Ranging Code.

<Step S65> The controller 250 waits for transmission of the "RNG-RSP" message from the BS 100. Thereafter, the operation goes to step S62.

<Step S66> The controller 250 waits for transmission of the "UL-MAP (CDMA Allocation IE)" message from the BS 100.

<Step S67> The controller 250 acquires the "UL-MAP (CDMA Allocation IE)" message transmitted from the BS 100.

<Step S68> The controller 250 transmits the "RNG-REQ (MAC Address, etc)" message. Specifically, the controller 250 produces a message parameter having the same form as the value of the type "X" in the TLV definition table 261 on the basis of the contents of the message-information management table 263. The message parameter is constituted by the size of the message to be transmitted, the time of delay, and the transmission trigger ID. The size of the message to be transmitted and the time of delay can be acquired from the message-information management table 263, and the transmission trigger ID can be acquired from the transmission-trigger table 262. That is, the controller 250 searches the transmission-trigger table 262 for the message to be transmitted corresponding to the type of the message indicated in the column "Transmitted Message" in the message-information management table 263, and acquires from the transmission-trigger table 262 the transmission trigger ID corresponding to the message to be transmitted which is searched for.

<Step S69> The controller 250 waits for transmission of the "RNG-RSP (Basic/Primary CID, etc)" message from the BS 100. In the case where the "RNG-RSP (Basic/Primary CID, etc)" message from the BS 100 reaches the MS 200, the operation goes to step S72. In the case where the "UL-MAP (Burst Allocation)" message from the BS 100 reaches the MS 200 before the "RNG-RSP (Basic/Primary CID, etc)" message reaches the MS 200, the operation goes to step S70.

<Step S70> The controller 250 acquires the "UL-MAP (Burst Allocation)" message transmitted from the BS 100.

<Step S71> The controller 250 retransmits the "RNG-REQ (MAC Address, etc)" message. Thereafter, the operation goes to step S69.

<Step S72> The controller 250 acquires the "RNG-RSP (Basic/Primary CID, etc)" message transmitted from the BS 100.

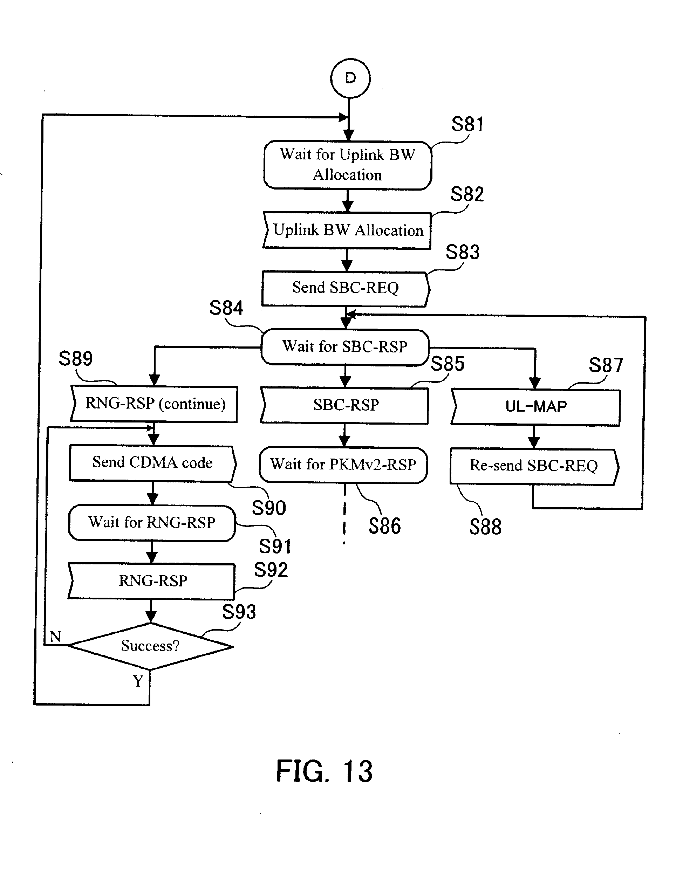

<Step S73> The controller 250 makes preparations for transmission of the "SBC-REQ" message. Thereafter, the operation goes to step S81 (indicated in FIG. 13).

FIG. 13 is a second flow diagram indicating operations performed by the controller in the MS. The operations of FIG. 13 are explained below step by step.

<Step S81> The controller 250 waits for transmission of the "UL-MAP (Burst Allocation)" message from the BS 100.

<Step S82> The controller 250 acquires the "UL-MAP (Burst Allocation)" message transmitted from the BS 100.

<Step S83> The controller 250 transmits the "SBC-REQ" message to the BS 100.

<Step S84> The controller 250 waits for transmission of the "SBC-RSP" message from the BS 100. When the "SBC-RSP" message from the BS 100 reaches the MS 200, the operation goes to step S85. When the "UL-MAP (Burst Allocation)" message from the BS 100 reaches the MS 200, the operation goes to step S87. Further, when the "RNG-RSP (Continue)" message from the BS 100 reaches the MS 200, the operation goes to step S89.

<Step S85> The controller 250 acquires the "SBC-RSP" message transmitted from the BS 100.

<Step S86> The controller 250 waits for transmission of the "PKMv2-RSP (EAP-Transfer: EAP Request/Identify)" message from the BS 100. Thereafter, messages are exchanged between the MS 200 and the BS 100 as indicated in FIG. 7.

<Step S87> The controller 250 acquires the "UL-MAP (Burst Allocation)" message transmitted from the BS 100.

<Step S88> The controller 250 retransmits the "SBC-REQ" message to the BS 100. Thereafter, the operation goes to step S84.

<Step S89> The controller 250 acquires the "RNG-RSP (Continue)" message transmitted from the BS 100.

<Step S90> The controller 250 transmits the CDMA Ranging Code to the BS 100.

<Step S91> The controller 250 waits for transmission of the "RNG-RSP" message from the BS 100.

<Step S92> The controller 250 acquires the "RNG-RSP" message transmitted from the BS 100.

<Step S93> The controller 250 determines whether or not the acquired "RNG-RSP" message indicates the Success Status. When yes is determined, the operation goes to step S81. When no is determined, the operation goes to step S90.

As explained above, efficient bandwidth allocation can be realized without impairing communication reliability.

Although messages for requesting or allocating bandwidths for transmission of the "PKM-REQ" messages are not indicated in the above explanations on the first embodiment, the operations similar to the operations explained above can also be applied to the bandwidth allocation for the "PKM-REQ" messages (e.g., the "PKMv2-REQ (Key Request)" message).

### <Second Embodiment>

Next, the second embodiment is explained below. The second embodiment is applied to the cases in which an MS transmits a message to a BS after the MS performs some processing in response to a message from the BS, and the processing time of the MS cannot be evaluated in advance. In the first embodiment, the time of delay occurring until preparations for transmission of the message to be transmitted from the MS are completed and the size of the message are predetermined in the MS. However, in some type of processing, the time of delay can vary. For example, information for authentication is exchanged by PKM messages. In some cases, the MS performs verification of the validity of information contained in a message received from the BS, generation of a key, and the like, so that the time of delay occurring until transmission of a subsequent message can vary.

According to the second embodiment, even in the case where the time of delay can vary and preparations for transmission of a message cannot be completed in a predetermined time of delay, the processing efficiency in bandwidth allocation for transmission of the message is improved. Even in the above case, the first embodiment can be applied by determining the fixed time of delay to be the maximum delay time. However, in the case where the first embodiment is applied as above, the determined time of delay is too large, so that the processing delay increases.

In order to solve the above problem, according to the second embodiment, the BS first allocates to an MS a Bandwidth Request CDMA Code, which is unique to the MS. Immediately before the MS becomes ready to transmit a subsequent message, the MS transmits to the BS the Bandwidth Request CDMA Code as a wireless-bandwidth request signal for requesting bandwidth allocation. When the BS receives the Bandwidth Request CDMA Code, the BS determines the MS on the basis of the Bandwidth Request CDMA Code, and allocates a bandwidth through which a message expected to be received next can be transmitted. The message size is assumed to be known in advance by both of the BS and the MS, for example, by informing the BS of the message size by the MS in a similar manner to the first embodiment.

The Bandwidth Request CDMA Code can be allocated by the BS to the MS, for example, by using an "RNG-RSP" message or the like. At this time, it is possible to limit the expiration period of the allocated code to the time at which the process for network entry of the MS receiving the allocation is completed, for reducing the number of codes.

In addition, the code may be allocated on a message-by-message basis. That is, the BS can attach, to a message to be transmitted from the BS to the MS, a Bandwidth Request Code for requesting a bandwidth for use in transmission of a subsequent message from the MS. Then, the MS can use the Bandwidth Request CDMA Code for requesting a bandwidth for use in the transmission of the subsequent message.

The functions of the BS and the MS for realizing the above processing are similar to the functions in the first embodiment illustrated in FIGS. 3 and 4. However, the second embodiment is different from the first embodiment in the processing performed by the controller 150 in the BS 100, the data stored in the storage 160 in the BS 100, the processing performed by the controller 250 in the MS 200, and the data stored in the.storage 260 in the MS 200. Therefore, the features of the second embodiment which are different from the first embodiment are explained below with reference to FIGS. 3 and 4.

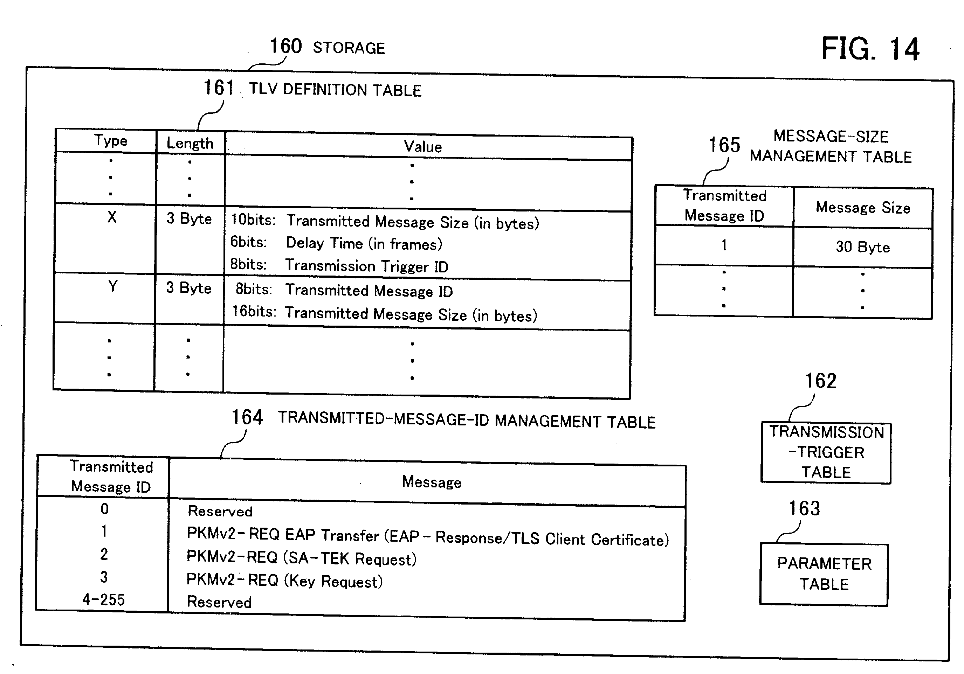

FIG. 14 is a diagram illustrating the contents of the storage in the BS in the second embodiment. The storage 160 in the BS 100 stores in advance the TLV definition table 161, the transmission-trigger table 162, and a transmitted-message-ID management table 164. In addition, when the MS 200 is connected to the BS 100, the parameter table 163 and a message-size management table 165 are produced by the controller 150, and stored in the storage 160.

A TLV definition of the type "Y," as well as the TLV definition of the type "X" (indicated in FIG. 5), is recorded in the TLV definition table 161 indicated in FIG. 14. In the TLV definition of the type "Y," the leading eight bits indicate the transmitted message ID, and the subsequent 16 bits indicate the size of the message to be transmitted (in bytes). The transmitted message ID is an identification number for uniquely identifying a message transmitted from the MS 200 to the BS 100.

The controller 150 in the BS 100 recognizes the message parameter received from the MS 200, on the basis of the TLV definition table 161. Specifically, when the controller 150 receives a message parameter of the type "X," the controller 150 determines that the message parameter is for automatic bandwidth allocation. Therefore, the controller 150 analyzes the message parameter of the type "X" by reference to the TLV definition table 161, and records the transmission trigger ID, the time of delay, and the message size in the parameter table 163.

In addition, when the controller 150 receives a message parameter of the type "Y," the controller 150 determines that the message parameter is for bandwidth allocation based on reception of a BW Request Code. Therefore, the controller 150 analyzes the message parameter of the type "Y" by reference to the TLV definition table 161, and records the transmitted message ID and the message size in the message-size management table 165.

The contents of the transmission-trigger table 162 and the parameter table 163 are as indicated in FIG. 5.

The transmitted-message-ID management table 164 is a data table for management of the transmitted message ID. The transmitted-message-ID management table 164 has the columns of "Transmitted Message ID" and "Message." The identification number of each message transmitted from the MS 200 to the BS 100 is recorded in the column "Transmitted Message ID," and the type of the message corresponding to the transmitted message ID is recorded in the column "Message."

The message-size management table 165 is a data table for management of the data sizes of all or part of the messages transmitted from the MS 200 to the BS 100 for each of which the time of delay is unknown and the data size is known. The message-size management table 165 has the columns of "Transmitted Message ID" and "Message Size." The identification number of each message transmitted from the MS 200 is set in the column "Transmitted Message ID," and the data size of the corresponding message is set in the column "Message Size."

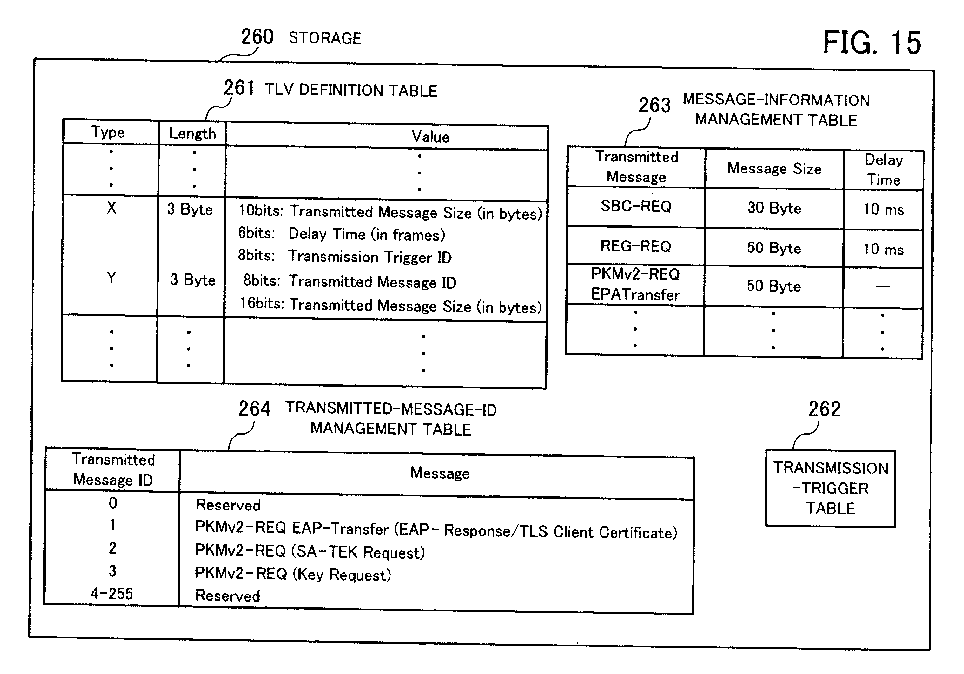

FIG. 15 is a diagram illustrating the contents of the storage in the MS in the second embodiment. The storage 260 in the MS 200 stores the TLV definition table 261, the transmission-trigger table 262, and a transmitted-message-ID management table 264. When the MS 200 is connected, the controller 250 produces a message-information management table 263, and stores the message-information management table 263 in the storage 260.

The structures and the contents of the TLV definition table 261 are identical to the TLV definition table 161 indicated in FIG. 14. The contents of the transmission-trigger table 262 are identical to the contents indicated in FIG. 6.

The message sizes of one or more messages for each of which the time of delay is unknown and the data size is known in advance, as well as the information indicated in FIG. 6, are set in the message-information management table 263. In the message-information management table 263, for the one or more messages for each of which the time of delay is unknown and the data size is known in advance, valid data are set only in the column "Message Size," and invalid data are set in the column "Delay Time."

The structures and the contents of the transmitted-message-ID management table 264 are identical to the transmitted-message-ID management table 164 indicated in FIG. 14.

When the above data are used, efficient bandwidth allocation can be realized between the BS 100 and the MS 200.

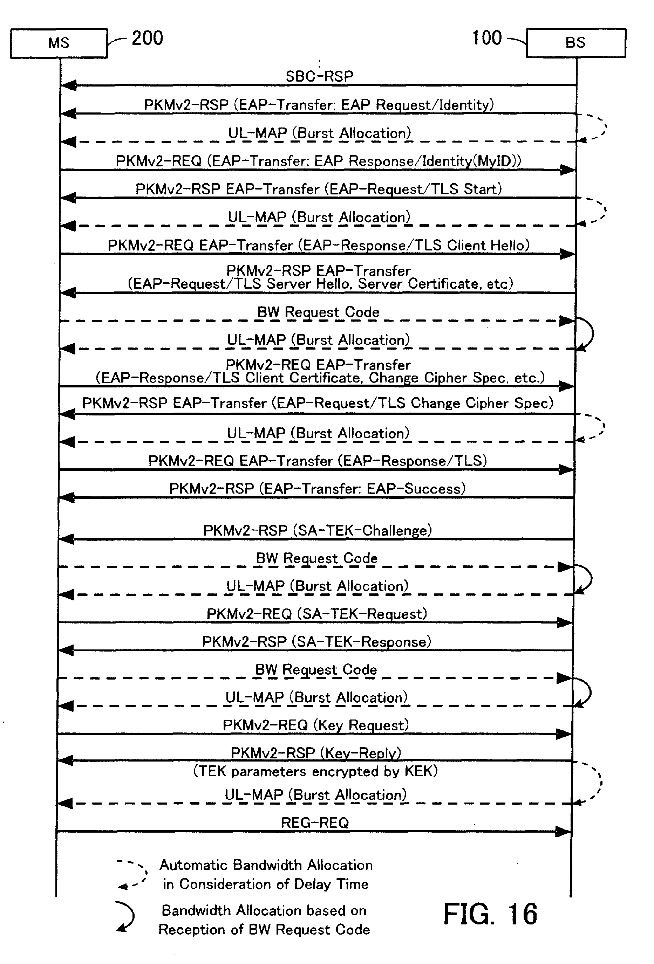

FIG. 16 is a diagram indicating a sequence of messages exchanged when the MS starts an operation for connection to the BS in the second embodiment. In FIG. 16, it is assumed that EAP-TLS (Extensible Authentication Protocol Transport Layer Security) is adopted as the authentication technique. The sequence preceding the transmission of the "SBC-REQ" message in FIG. 16 is similar to the first embodiment.

The messages exchanged between the BS 100 and the MS 200 are indicated in FIG. 16. In FIG. 16, the exchanged messages are indicated by arrow lines, the types of the messages are indicated above the arrow lines, and the data contained in the messages are indicated in parentheses following the types of the messages. In addition, the signals and messages for requesting and allocating a bandwidth are indicated by dashed lines, and the main messages for exchanging information on authentication and the like between the MS 200 and the BS 100 are indicated by solid lines.

Further, the curved lines shown on the BS side with arrows each indicate processing for allocation of a bandwidth, and extend from a message causing the processing for bandwidth allocation to a message informing the MS 200 of details of the bandwidth allocation. In particular, the curved dashed lines indicate automatic bandwidth allocation in consideration of the time of delay, where the automatic bandwidth allocation is realized by the function of allocating a bandwidth according to the first embodiment. On the other hand, the curved solid lines indicate bandwidth allocation based on reception of the BW Request Code, which is realized by the function of allocating a bandwidth provided according to the second embodiment.

As indicated in FIG. 16, after the BS 100 transmits the "SBC-RSP" message, the BS 100 transmits a "PKMv2-RSP (EAP-Transfer: EAP Request/Identify)" message to the MS 200 in order to start an authentication sequence. When the MS 200 receives the "PKMv2-RSP (EAP-Transfer: EAP Request/Identify)" message, and a predetermined time elapses after the transmission of the "PKMv2-RSP (EAP-Transfer: EAP Request/Identify)" message, the BS 100 allocates to the MS 200 a bandwidth for transmission, from the MS 200 to the BS 100, of a "PKMv2-REQ (EAP-Transfer: EAP-Response/Identify(MyID))" message containing an NAI (Network Access Identifier) as an identification of the MS 200. Similar to the first embodiment, the BS 100 is informed of the predetermined time by the MS 200 using the "RNG-REQ (MAC Address, etc)" message, and records the predetermined time in the parameter table 163. Alternatively, the above time of delay as a parameter unique to the system may be recorded in advance in the parameter table 163.

Incidentally, the "PKMv2-REQ" message contains processing in a protocol layer which is higher than the "SBC-REQ" message and the "REG-REQ" message, including authentication information. Therefore, it is preferable that the processing time allowed for the MS 200 becoming ready to transmit the "PKMv2-REQ" message be greater than the processing time allowed for the MS 200 becoming ready to transmit the "SBC-REQ" message or the "REG-REQ" message.

When the MS 200 receives the "PKMv2-RSP (EAP-Transfer: EAP Request/Identify)" message, the MS 200 transmits to the BS 100 the "PKMv2-REQ (EAP-Transfer: EAP-Response/Identify(MyID))" message containing the NAI (Network Access Identifier) of the MS 200 by using an automatically allocated wireless bandwidth. At this time, the NAI has, for example, the form as "user-name@service_provider.com". The NAI is transferred through the BS 100 to an authentication server (not shown), although explanations on the exchange of messages between the BS 100 and the authentication server are not included in this specification.

The BS 100 starts TLS (Transport Layer Security) authentication by transmitting a "PKMv2-RSP EAP-Transfer (EAP-Request/TLS Start)" message to the MS 200. At this time, the BS 100 allocates to the MS 200 a wireless bandwidth for transmission of an "EAP-Response/TLS Client Hello" message by the MS 200 in a similar manner to the aforementioned operation after the transmission of the "EAP Request/Identify" message. When the MS 200 receives the "PKMv2-RSP EAP-Transfer (EAP-Request/TLS Start)" message, the MS 200 transmits a "PKMv2-REQ EAP-Transfer (EAP-Response/TLS Client Hello)" message to the BS 100 by using the automatically allocated bandwidth. The "PKMv2-REQ EAP-Transfer (EAP-Response/TLS Client Hello)" message contains a TLS version, a session ID, a random number, candidate cipher algorithms, and the like.

Subsequently, the BS 100 transmits to the MS 200 a "PKMv2-RSP EAP-Transfer (EAP-Request/TLS Server Hello, Server Certificate, ...)" message containing a selected TLS version, a session ID, a random number, candidate cipher algorithms, a Server Certificate, and the like.

When the MS 200 receives the Server Certificate, it is necessary for the MS 200 to verify the validity of the Server Certificate before transmission of a response message. However, the verification time of the Server Certificate is uncertain. Therefore, the BS 100 allocates a bandwidth after receiving the Bandwidth Request CDMA Code from the MS 200, instead of automatically allocating a bandwidth for transmission of a response message from the MS 200. As mentioned before, the Bandwidth Request CDMA Code is uniquely allocated to the MS 200. Therefore, when the BS 100 receives the Bandwidth Request CDMA Code, the BS 100 can determine which MS 200 transmits the Bandwidth Request CDMA Code. When the verification of the Server Certificate is completed, the MS 200 transmits the allocated Bandwidth Request CDMA Code to the BS 100 before preparations for transmission of a "PKMv2-REQ EAP-Transfer (EAP-Response/TLS Client Certificate ...)" message are completed.

When the BS 100 receives the Bandwidth Request CDMA Code, the BS 100 allocates to the MS 200 a bandwidth for transmission of the EAP-Response/TLS Client Certificate from the MS 200. At this time, the bandwidth is determined according to the message size recorded in the message-size management table 165 in correspondence with the message ID of the "PKMv2-REQ EAP-Transfer (EAP-Response/TLS Client Certificate . . .)" message. When the bandwidth is allocated to the MS 200, the BS 100 transmits a "UL-MAP (Burst Allocation)" message to the MS 200. When the MS 200 receives the allocation of the bandwidth, the MS 200 transmits to the BS 100 the "PKMv2-REQ EAP-Transfer (EAP-Response/TLS Client Certificate . . .)" message containing the Client Certificate and the like by use of the allocated bandwidth.

In the following operations, the request and allocation of a bandwidth are performed by using either of the manner in which the bandwidth is automatically allocated in consideration of the time of delay as explained for the first embodiment and the manner in which the bandwidth is allocated on the basis of the Bandwidth Request CDMA Code, where the latter manner is newly provided according to the second embodiment. Therefore, in the following explanations on the bandwidth allocation during the EAP exchange using PKM messages, only the used manner of the bandwidth allocation is indicated, and explanations on the exchange of messages and signals for the bandwidth allocation are not indicated.

When the BS 100 receives the "PKMv2-REQ EAP-Transfer (EAP-Response/TLS Client Certificate ...)" message, the BS 100 performs authentication of the Client Certificate. When the authentication succeeds, the BS 100 transmits to the MS 200 a "PKMv2-RSP EAP-Transfer (EAP-Request/TLS Change Cipher Spec)" message together with information indicating the success of the authentication, the cipher algorithm, and the like. At this time, the BS 100 automatically allocates a bandwidth, in consideration of the time of delay, for transmission of a "PKMv2-REQ EAP-Transfer (EAP-Response/TLS)" message from the MS 200.

When the MS 200 receives the EAP-Request/TLS Change Cipher Spec, the MS 200 transmits to the BS 100 the "PKMv2-REQ EAP-Transfer (EAP-Response/TLS)" message through the allocated wireless bandwidth in response to the EAP-Request/TLS Change Cipher Spec.

When the BS 100 receives the "PKMv2-REQ EAP-Transfer (EAP-Response/TLS)" message, the BS 100 transmits to the MS 200 a "PKMv2-RSP (EAP-Transfer: EAP-Success)" message containing a Master Secret Key (MSK). At this time, the BS 100 generates an AK (Authentication Key) from the MSK, and further generates a KEK (Key Encryption Key) and a CMAC_Key from the AK.

When the MS 200 receives the "PKMv2-RSP (EAP-Transfer: EAP-Success)" message, the MS 200 generates the AK from the MSK, and the KEK and the CMAC_Key from the AK.

After the BS 100 transmits the "PKMv2-RSP (EAP-Transfer: EAP-Success)" message and generates the AK, KEK and CMAC_Key, the BS 100 transmits to the MS 200 a "PKMv2-RSP (SA-TEK-Challenge)" message, which is protected by the generated CMAC_Key. That is, a result (CMAC) of a hash calculation of the contents of the PKM-RSP message by use of the CMAC_Key is attached to the PKM-RSP message so that falsification by somebody other than the BS 100 and the MS 200, which share the CMAC_Key, can be detected.

When the MS 200 receives the "PKMv2-RSP (SA-TEK-Challenge)" message, the MS 200 compares the CMAC attached to the PKM-RSP message with a result (CMAC) of a hash calculation of the contents of the received PKM-RSP message for confirming identicalness. When the CMACs are identical, the MS 200 can confirm that the BS 100 and the MS 200 have the identical CMAC_Keys. When the processing for the confirmation is completed, the MS 200 receives bandwidth allocation based on the Bandwidth Request CDMA Code. Then, the MS 200 transmits to the BS 100 a "PKMv2-REQ (SA-TEK-Request)" message by use of the allocated wireless bandwidth in response to the "PKMv2-RSP (SA-TEK-Challenge)" message, where the "PKMv2-REQ (SA-TEK-Request)" message is protected with the CMAC.

When the BS 100 receives the "PKMv2-REQ (SA-TEK-Request)" message, the BS 100 performs CMAC confirmation processing in a similar manner to the MS 200 for confirming that the BS 100 and the MS 200 have the identical CMAC_Keys. Then, the BS 100 transmits to the MS 200 a "PKMv2-RSP (SA-TEK-Response)" message in response to the "PKMv2-REQ (SA-TEK-Request)" message.

When the MS 200 receives the "PKMv2-RSP (SA-TEK-Response)" message, the MS 200 confirms that the SA-TEK-Request is normally received by the BS 100. When the MS 200 confirms that the BS 100 and the MS 200 have the identical CMACs, the MS 200 receives bandwidth allocation based on the Bandwidth Request CDMA Code. Then, the MS 200 transmits to the BS 100 a "PKMv2-REQ (Key Request)" message for requesting an issue of an encryption key TEK (Traffic Encryption Key) for use in encryption of user data.

When the BS 100 receives the "PKMv2-REQ (Key Request)" message, the BS 100 randomly generates the TEK, encrypts the TEK with the KEK, inserts the encrypted TEK into a Key-Reply, and transmits "PKMv2-RSP (Key-Reply)" message to the MS 200. At this time, the BS 100 performs automatic bandwidth allocation in consideration of the time of delay for transmission of the "REG-REQ" message from the MS 200.

When the MS 200 receives the "PKMv2-REQ (Key-Reply)" message, the BS 100 transmits the "REG-REQ" message to the BS 100, and continues the Network Entry process.

Although, in the example of FIG. 16, the message containing authentication information is indicated as an example for which a bandwidth request by use of the Bandwidth Request CDMA Code is preferable (in other words, an example of which the timing of transmission of a message from the MS 200 is irregular), the bandwidth request by use of the Bandwidth Request CDMA can be applied to other messages.

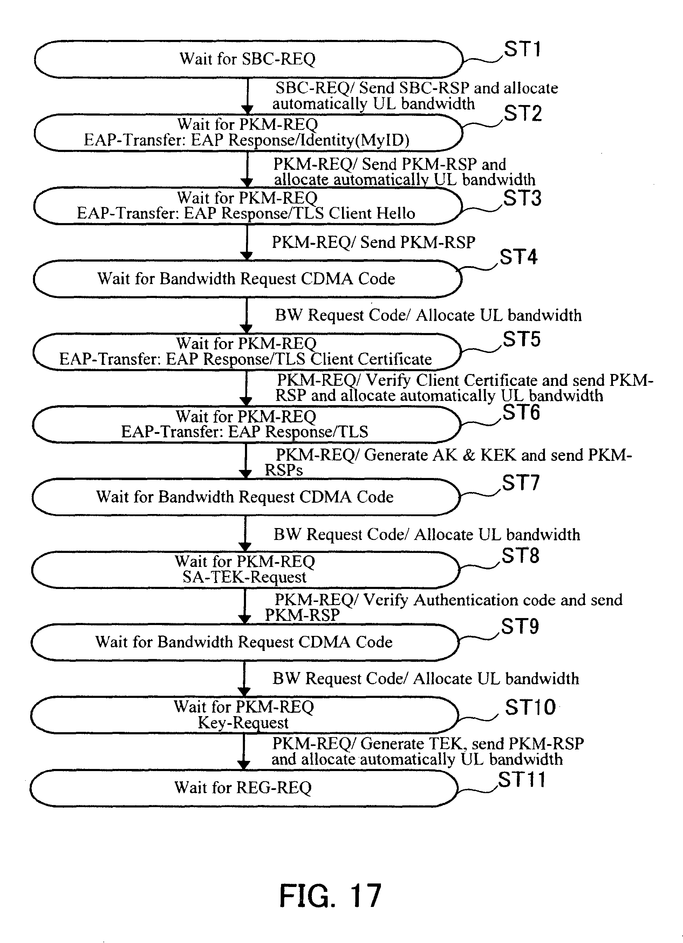

FIG. 17 is a state transition diagram of the BS. FIG. 17 indicates state transitions of the BS 100 in the authentication processing performed after the state ST1, in which the BS 100 waits for reception of the "SBC-REQ" message. When the BS 100 in the state ST1 receives the "SBC-REQ" message, the BS 100 transmits the "SBC-RSP" message and other messages, and performs automatic bandwidth allocation in consideration of the time of delay. Thereafter, the state of the BS 100 transitions from the state ST1 to the state ST2, in which the BS 100 waits for reception of the "PKMv2-REQ (EAP-Transfer: EAP-Response/Identify(MyID))" message.

When the BS 100 in the state ST2 receives the "PKMv2-REQ (EAP-Transfer: EAP-Response/Identify(MyID))" message, the BS 100 performs automatic bandwidth allocation in consideration of the time of delay, and thereafter the state of the BS 100 transitions from the state ST2 to the state ST3, in which the BS 100 waits for reception of the "PKMv2-REQ EAP-Transfer (EAP-Response/TLS Client Hello)" message.

When the BS 100 in the state ST3 receives the "PKMv2-REQ EAP-Transfer (EAP-Response/TLS Client Hello)" message, the BS 100 transmits the "PKMv2-RSP EAP-Transfer (EAP-Request/TLS Server Hello)", and thereafter the state of the BS 100 transitions from the state ST3 to the state ST4, in which the BS 100 waits for reception of the Bandwidth Request CDMA Code.

When the BS 100 in the state ST4 receives the Bandwidth Request CDMA Code, the BS 100 performs bandwidth allocation to the MS 200, and thereafter the state of the BS 100 transitions from the state ST4 to the state ST5, in which the BS 100 waits for reception of the "PKMv2-REQ EAP-Transfer (EAP-Response/TLS Client Certificate . . .)" message.

When the BS 100 in the state ST5 receives the "PKMv2-REQ EAP-Transfer (EAP-Response/TLS Client Certificate . . .)" message, the BS 100 performs authentication of the Client Certificate, transmits the "PKMv2-RSP EAP-Transfer (EAP-Request/TLS Change Cipher Spec)" message, and performs automatic bandwidth allocation in consideration of the time of delay. Thereafter, the state of the BS 100 transitions from the state ST5 to the state ST6, in which the BS 100 waits for reception of the "PKMv2-REQ EAP-Transfer (EAP-Response/TLS)" message.

When the BS 100 in the state ST6 receives the "PKMv2-REQ EAP-Transfer (EAP-Response/TLS)" message, the BS 100 performs processing for the transmission of the "PKMv2-RSP (EAP-Transfer: EAP-Success)" message and other processing, and thereafter the state of the BS 100 transitions from the state ST6 to the state ST7, in which the BS 100 waits for reception of the Bandwidth Request CDMA Code.

When the BS 100 in the state ST7 receives the Bandwidth Request CDMA Code, the BS 100 performs bandwidth allocation to the MS 200, and thereafter the state of the BS 100 transitions from the state ST7 to the state ST8, in which the BS 100 waits for reception of the "PKMv2-REQ. (SA-TEK-Request)" message.

When the BS 100 in the state ST8 receives the "PKMv2-REQ (SA-TEK-Request)" message, the BS 100 performs the CMAC confirmation processing and processing for transmission of the "PKMv2-RSP (SA-TEK-Response)" message. Thereafter, the state of the BS 100 transitions from the state ST8 to the state ST9, in which the BS 100 waits for reception of the Bandwidth Request CDMA Code.

When the BS 100 in the state ST9 receives the Bandwidth Request CDMA Code, the BS 100 performs bandwidth allocation to the MS 200, and thereafter the state of the BS 100 transitions from the state ST9 to the state ST10, in which the BS 100 waits for reception of the "PKMv2-REQ (Key Request)" message.

When the BS 100 in the state ST10 receives the "PKMv2-REQ (Key Request)" message, the BS 100 generates the TEK, transmits the "PKMv2-RSP (Key-Reply)" message, and performs automatic bandwidth allocation in consideration of the time of delay. Thereafter, the state of the BS 100 transitions from the state ST10 to the state ST11, in which the BS 100 waits for reception of the "REG-REQ" message.

Next, the processing sequences in the controller 150 in the BS 100 and the controller 250 in the MS 200 according to the second embodiment are explained below.

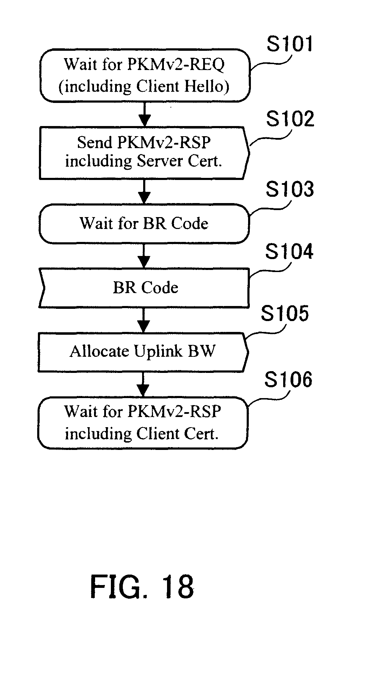

FIG. 18 is a flow diagram indicating operations performed by the controller in the BS in the second embodiment. FIG. 18 indicates the processing sequence from the operation of waiting for reception of the "PKMv2-REQ EAP-Transfer (EAP-Response/TLS Client Hello)" message to the operation of waiting for reception of the "PKMv2-REQ EAP-Transfer (EAP-Response/TLS Client Certificate ...)" message. The operations of FIG. 18 are explained below step by step.

<Step S101> The controller 150 waits for transmission of the "PKMv2-REQ EAP-Transfer (EAP-Response/TLS Client Hello)" message from the MS 200.

<Step S102> When the controller 150 receives the "PKMv2-REQ EAP-Transfer (EAP-Response/TLS Client Hello)" message, the controller 150 transmits the "PKMv2-RSP EAP-Transfer (EAP-Request/TLS Server Hello)" message to the MS 200.

<Step S103> The controller 150 waits for transmission of the Bandwidth Request CDMA Code from the MS 200.

<Step S104> The controller 150 acquires the Bandwidth Request CDMA Code transmitted from the MS 200.

<Step S105> When the controller 150 recognizes, on the basis of the Bandwidth Request CDMA Code, that the MS 200 issues a request for bandwidth allocation, the controller 150 determines the message ID of the the "PKMv2-REQ EAP-Transfer (EAP-Response/TLS Client Certificate . . .)" message by reference to the transmitted-message-ID management table 164, where the "PKMv2-REQ EAP-Transfer (EAP-Response/TLS Client Certificate . . .)" message is the message which is to be received next during the message exchange with the MS 200. In the example of FIG. 14, the message ID of the above message is "1." Subsequently, the controller 150 refers to the message-size management table 165, and acquires the message size corresponding to the message ID "1." Further, the controller 150 allocates to the MS 200 a bandwidth corresponding to the acquired message size, and transmits to the MS 200 the "UL-MAP (Burst Allocation)" message, which indicates the allocated bandwidth.

<Step S106> The controller 150 goes into the state in which the controller 150 waits for reception of the the "PKMv2-REQ EAP-Transfer (EAP-Response/TLS Client Certificate ...)" message from the MS 200.

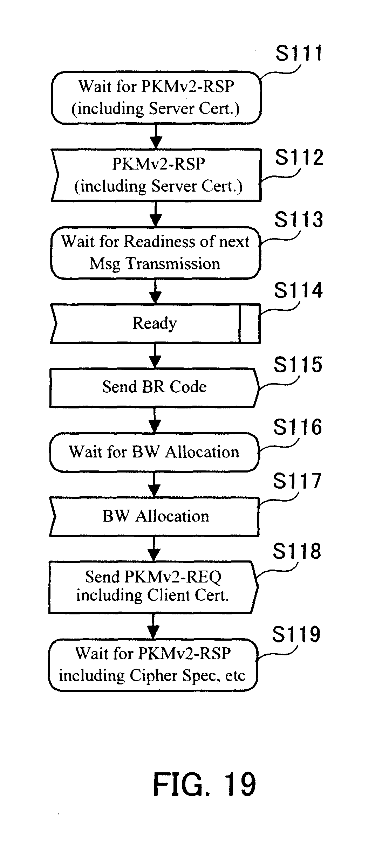

FIG. 19 is a flow diagram indicating operations performed by the controller in the MS in the second embodiment. FIG. 19 indicates the processing sequence from the operation of waiting for reception of the "PKMv2-RSP" message containing the server certificate to the operation of reception of the next "PKMv2-RSP" message. The operations of FIG. 19 are explained below step by step.

<Step S111> The controller 250 waits for transmission of the "PKMv2-RSP EAP-Transfer (EAP-Request/TLS Server Hello, Server Certificate, ...)" message from the BS 100.

<Step S112> The controller 250 acquires the "PKMv2-RSP EAP-Transfer (EAP-Request/TLS Server Hello, Server Certificate, ...)" message transmitted from the BS 100.

<Step S113> The controller 250 makes the message exchange process enter a state in which the message exchange process waits for preparations for transmission of the next message.

<Step S114> The controller 250 verifies the effectiveness of the Server Certificate by a process different from the message exchange process. When the verification is completed, the controller 250 makes the message exchange process complete the preparations for transmission of the "PKMv2-REQ EAP-Transfer (EAP-Response/TLS Client Certificate . . .)" message.

<Step S115> The controller 250 transmits the Bandwidth Request CDMA Code to the BS 100.

<Step S116> The controller 250 waits for bandwidth allocation by the BS 100.

<Step S117> The controller 250 acquires the "UL-MAP (Burst Allocation)" message being transmitted from the BS 100 and indicating the bandwidth allocation.

<Step S118> The controller 250 transmits the "PKMv2-REQ EAP-Transfer (EAP-Response/TLS Client Certificate ...)" message to the BS 100.

<Step S119> The controller 250 waits for transmission of the "PKMv2-RSP EAP-Transfer (EAP-Request/TLS Change Cipher Spec)" message from the BS 100.

As explained above, even in the case where the time of delay in the MS 200 varies, the bandwidth allocation can be realized by a smaller number of message exchanges than the conventional message exchange process.

### <Third Embodiment>

The third embodiment is a variation of the first embodiment. According to the third embodiment, the BS 100 holds default values of the time of delay and the message size of a message to be transmitted from the MS, and automatically allocates a bandwidth in consideration of the time of delay on the basis of the default values unless the MS informs the BS of a message parameter unique to the MS. When the BS is informed by the MS of a message parameter unique to the MS, the BS 100 automatically allocates a bandwidth in consideration of the time of delay on the basis of the message parameter.

The functions of the BS and the MS for realizing the above processing are similar to the functions in the first embodiment illustrated in FIGS. 3 and 4. However, the third embodiment is different from the first embodiment in the processing performed by the controller 150 in the BS 100, the data stored in the storage 160 in the BS 100, and the processing performed by the controller 250 in the MS 200. Therefore, the features of the third embodiment which are different from the first embodiment are explained below with reference to FIGS. 3 and 4.

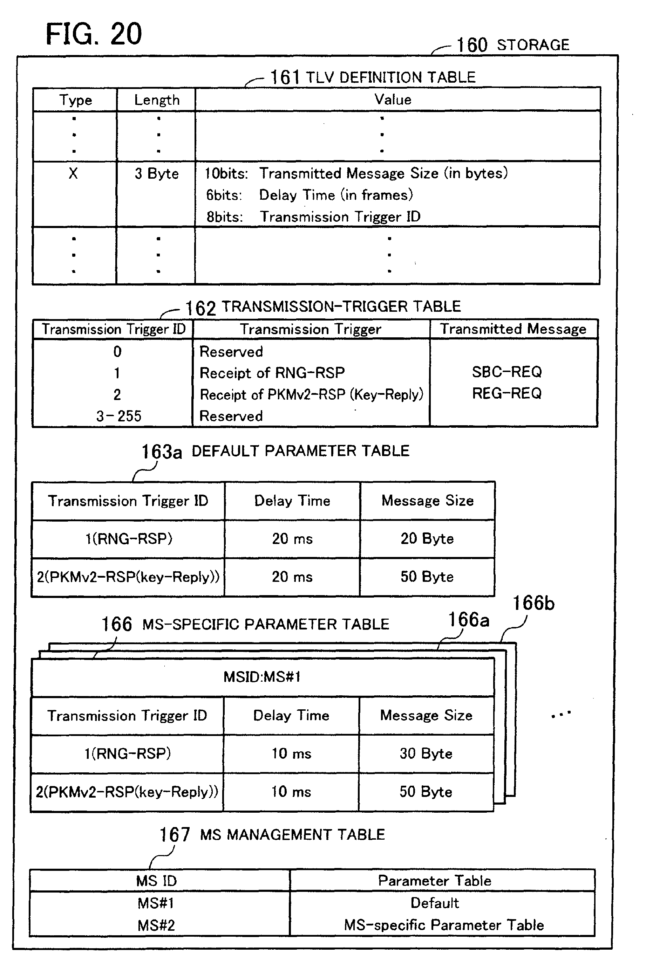

FIG. 20 is a diagram illustrating the contents of the storage in the BS in the third embodiment. The storage 160 in the BS 100 stores in advance the TLV definition table 161, the transmission-trigger table 162, a default parameter table 163a, and an MS management table 167. In addition, when a message parameter is transmitted from the MS 200, the controller 150 produces MS-specific parameter tables 166, 166a, 166b, ... for respectively different MSs, and stores the parameter tables 166, 166a, 166b, ... in the storage 160.

The contents of the TLV definition table 161 and the transmission-trigger table 162 are as indicated in FIG. 5.

The default parameter table 163a is a data table indicating default values of the time of delay and the message size of each message transmitted uplink from the MS. The default parameter table 163a has the same data structure as the parameter table 163 indicated in FIG. 5. However, the values in the default parameter table 163a are set in advance of the start of the system operation, while the values indicated by the message parameter transmitted from the MS 200 are set in the parameter table 163 in the first embodiment.

The MS-specific parameter tables 166 are provided for the respective MSs, and identification numbers (MSIDs) for uniquely identifying the respective MSs are set in the parameter tables 166. In addition, each MS-specific parameter table 166 has the columns of "Transmission Trigger ID," "Delay Time," and "Message Size." The value of the transmission trigger ID in the message parameter transmitted from the MS indicated by each MSID is set in the column "Transmission Trigger ID," the value of the time of delay in the message parameter transmitted from the MS indicated by each MSID is set in the column "Delay Time," and the value of the message size in the message parameter transmitted from the MS indicated by each MSID is set in the column "Message Size."

The MS management table 167 is a data table which indicates whether each MS connected to the BS 100 uses the default parameter table 163a or the MS-specific parameter table corresponding to the MSID of the MS. The MS management table 167 has the columns of "MSID" and "Parameter Table." The identification number (MSID) of each MS which is connected to the BS 100 is recorded in the column "MSID," and information indicating whether the MS indicated by the MSID uses the default parameter table or the MS-specific parameter table is set in the column "Parameter Table."

When communication with each MS is performed, the controller 150 records the MSID of the MS in the MS management table 167, and also records "Default" as an initial value in the column "Parameter Table" in the MS management table 167. Thereafter, when the BS 100 receives a message parameter from the MS, and the controller 150 produces the MS-specific parameter table 166 corresponding to the MS, the controller 150 updates the value in the column "Parameter Table" corresponding to the MSID of the MS to "MS-specific Parameter Table."

Next, processing for allocating a time period according to the third embodiment is explained below.

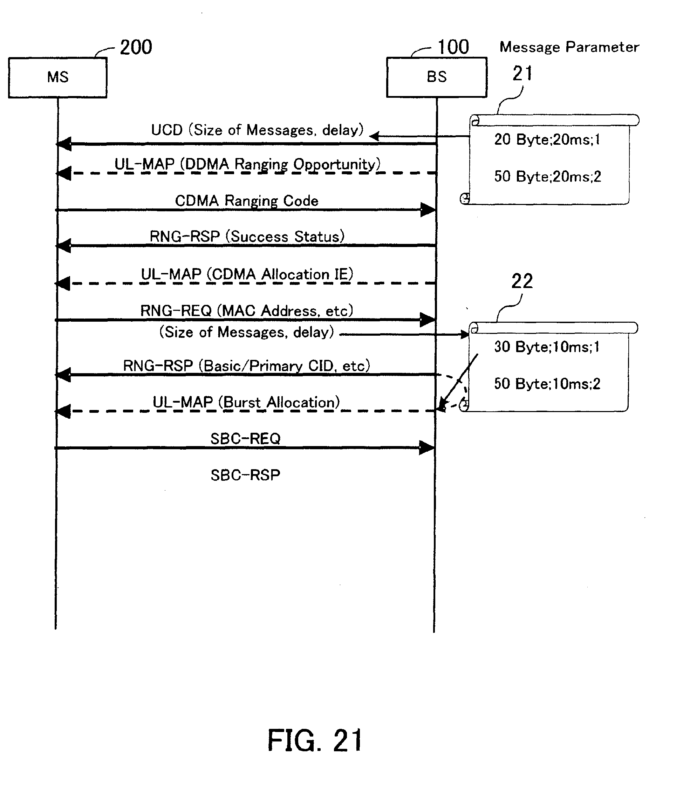

FIG. 21 is a diagram indicating a sequence of messages exchanged when the MS starts an operation for connection to the BS in the third embodiment.

As indicated in FIG. 21, the BS 100 inserts the default size of a message to be transmitted from the MS 200, the default time of delay in allocation of a wireless resource, and other information, into the "UCD (Uplink Channel Descriptor)" message, which is periodically broadcast by the BS 100. Specifically, the controller 150 refers to the default parameter table 163a, and acquires the transmission trigger ID, the time of delay, and the message size for each message for which automatic bandwidth allocation is to be performed. Then, the controller 150 generates a message parameter 21 in accordance with the definition of the type "X" indicated in the TLV definition table 161, inserts the generated message parameter 21 into the "UCD" message, and transmits broadcast the "UCD" message to the MS 200 and the like.

When the MS 200 receives the "UCD" message, the MS 200 compares the values in the message parameter 21 of which the MS 200 is informed, with the values held by the MS 200 in the message-information management table 263 (as indicated in FIG. 6). In the case where the compared values are not identical, the MS 200 informs the BS 100 of the parameter values held by the MS 200 as the message parameter 22, as in the first embodiment. Specifically, the controller 250 in the MS 200 transmits to the BS 100 the "RNG-REQ (MAC Address, etc)" message containing the message parameter 22, which indicates the contents of the message-information management table 263.

The controller 150 in the BS 100 produces the MS-specific parameter table 166 by use of the value of the message parameter 22 of which the BS 100 is informed, and stores the MS-specific parameter table 166 in the storage 160. In addition, the controller 150 changes the value in the column "Parameter Table" corresponding to the MSID of the MS 200 in the MS management table 167 to "MS-specific Parameter Table."

Thereafter, when the controller 150 in the BS 100 transmits to the MS 200 a message which is set in the transmission-trigger table 162 as a transmission trigger, the controller 150 first refers to the MS management table 167, and determines, on the basis of the MS management table 167, whether the MS 200 uses the default parameter table 163a or the MS-specific parameter table. In the case where the MS 200 uses the MS-specific parameter table, the controller 150 refers to the MS-specific parameter table corresponding to the MSID of the MS 200, and acquires the time of delay and the message size of a message to be transmitted from the MS 200 after the transmission of the message as the transmission trigger. After the acquired time of delay elapses, the controller 150 allocates to the MS 200 a wireless bandwidth corresponding to the message size. The MS 200 is informed of the allocated bandwidth by the "UL-MAP (Burst Allocation)" message.

Next, processing performed by the controller 250 in the MS 200 according to the third embodiment is explained in detail below.

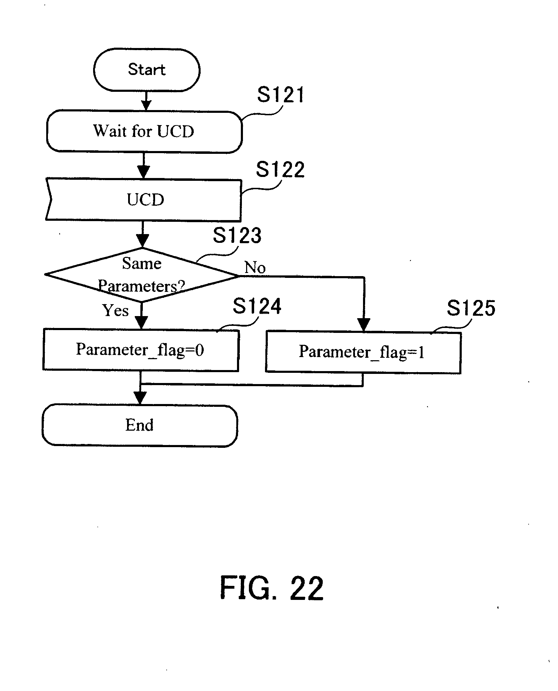

FIG. 22 is a flow diagram indicating operations performed by the MS when the MS receives a "UCD" message. The operations of FIG. 22 are explained below step by step.

<Step S121> The controller 250 waits for transmission of the "UCD (Size of Messages, delay)" message from the BS 100.

<Step S122> The controller 250 acquires the "UCD (Size of Messages, delay)" message transmitted from the BS 100.

<Step S123> The controller 250 compares the parameter which is set in the message-information management table 263 (as indicated in FIG. 6) with the message parameter 21 which is contained in the "UCD (Size of Messages, delay)" message. In the case where the compared parameters are completely identical, the operation goes to step S124. In the case where the compared parameters are not identical, the operation goes to step S125.

<Step S124> The controller 250 sets a parameter flag to "0," and thereafter the processing is completed.

<Step S125> The controller 250 sets a parameter flag to "1," and thereafter the processing is completed.

As explained above, a value is set in the parameter flag. Thereafter, when the "RNG-REQ (MAC Address, etc)" message is transmitted, it is determined whether or not the message parameter 22 is to be transmitted, on the basis of the value of the parameter flag.

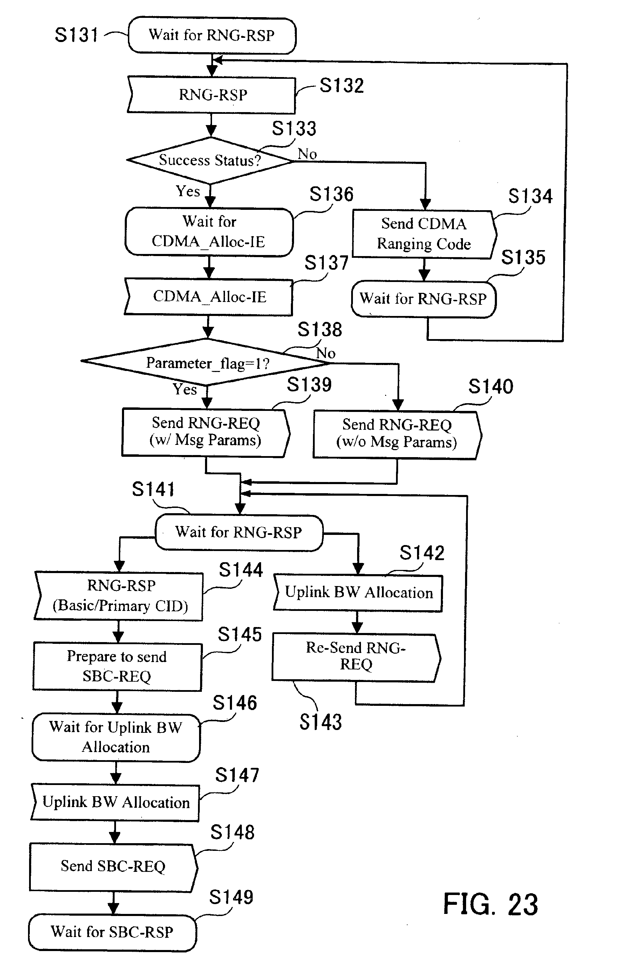

FIG. 23 is a flow diagram indicating operations performed by the MS after the MS transmits the CDMA Ranging Code until the MS transmits the "SBC-REQ" message. The operations of FIG. 23 are explained below step by step.

<Step S131> The controller 250 waits for transmission of the "RNG-RSP" message from the BS 100.

<Step S132> The controller 250 acquires the "RNG-RSP" message transmitted from the BS 100.

<Step S133> The controller 250 determines whether or not the "RNG-RSP" message indicates the Success Status. When yes is determined, the operation goes to step S136. When no is determined, the operation goes to step S134.

<Step S134> The controller 250 transmits the CDMA Ranging Code.

<Step S135> The controller 250 waits for transmission of the "RNG-RSP" message from the BS 100, and thereafter the operation goes to step S132.

<Step S136> The controller 250 waits for transmission of the "UL-MAP (CDMA Allocation IE)" message from the BS 100.

<Step S137> The controller 250 acquires the "UL-MAP (CDMA Allocation IE)" message transmitted from the BS 100.

<Step S138> The controller 250 determines whether or not the value of the parameter flag is "1." When the parameter flag is "1," the operation goes to step S139. When the parameter flag is "0," the operation goes to step S140.

<Step S139> The controller 250 transmits the "RNG-REQ (MAC Address, etc)" message containing the message parameter, and thereafter the operation goes to step S141.

<Step S140> The controller 250 transmits the "RNG-REQ (MAC Address, etc)" message not containing the message parameter.

<Step S141> The controller 250 waits for transmission of the "RNG-RSP (Basic/Primary CID, etc)" message from the BS 100. When the "RNG-RSP (Basic/Primary CID, etc)" message transmitted from the BS 100 reaches the MS 200, the operation goes to step S144. In addition, when the "UL-MAP (Burst Allocation)" message reaches the MS 200 before the "RNG-RSP (Basic/Primary CID, etc)" message reaches the MS 200, the operation goes to step S142.

<Step S142> The controller 250 acquires the "UL-MAP (Burst Allocation)" message transmitted from the BS 100.

<Step S143> The controller 250 retransmits the "RNG-REQ (MAC Address, etc)" message containing the message parameter, and thereafter the operation goes to step S141.

<Step S144> The controller 250 acquires the "RNG-RSP (Basic/Primary CID, etc)" message transmitted from the BS 100.

<Step S145> The controller 250 makes preparations for transmission of the "SBC-REQ" message.

<Step S146> The controller 250 waits for transmission of the "UL-MAP (Burst Allocation)" message from the BS 100.

<Step S147> The controller 250 acquires the "UL-MAP (Burst Allocation)" message transmitted from the BS 100.

<Step S148> The controller 250 transmits the "SBC-REQ" message to the BS 100.

<Step S149> The controller 250 waits for transmission of the "SBC-RSP" message from the BS 100.

The sequence of operations performed by the controller 150 in the BS 100 in the third embodiment is almost similar to the sequence of operations indicated in FIGS. 9 to 11. However, the third embodiment is different from the first embodiment in the operations in steps S20, S32, and S33. In step S20, the controller 150 acquires the message parameter in the case where the received message contains the message parameter. The controller 150 refers to the TLV definition table 161 (as indicated in FIG. 20), analyzes the message parameter, produces an MS-specific parameter table on the basis of the message parameter, and stores the MS-specific parameter table in the storage 160. In addition, the controller 150 changes the value in the column "Parameter Table" corresponding to the MSID of the MS 200 in the MS management table 167 to "MS-specific Parameter Table." In the case where the received message does not contain the message parameter, the controller 150 does not perform processing such as data update in the storage 160.

The time of delay which is used in the comparison for detecting the time expiration in step S32 in FIG. 10 is the time of delay which is set in the MS-specific parameter table for the MS 200 when the MS-specific parameter table for the MS 200 is already produced, and is the time of delay which is set in the default parameter table 163a when the MS-specific parameter table for the MS 200 is not yet produced. In addition, the bandwidth allocated in step S33 is determined on the basis of the message size which is set in the MS-specific parameter table for the MS 200 when the MS-specific parameter table for the MS 200 is already produced, and is the message size which is set in the default parameter table 163a when the MS-specific parameter table for the MS 200 is not yet produced.

As explained above, the message parameter can be transmitted from the MS 200 to the BS 100 only in the case where the time of delay and the message size which are set as default values in the BS 100 are not identical to the values which are set in the MS 200. In addition, since the default values which are set in the BS 100 are broadcast from the BS 100, it is possible to effectively use the wireless resource.

Further, the default value of the message size of each of the "SBC-REQ" message and the "REG-REQ" message and the default value of the time of delay occurring until transmission of each of the "SBC-REQ" message and the "REG-REQ" message after reception of the "RNG-RSP" message or the "PKM-RSP" message may also be stored in the MS 200 as well as the BS 100. In this case, the default parameter table 163a as indicated in FIG. 20 is also stored in advance in the storage 260 in the MS 200.

In the case where the default values are held in both of the BS 100 and the MS 200, it is unnecessary to insert the message parameter 21 in the "UCD" message which is broadcast from the BS 100. The MS 200 inserts the message parameter 22 in the "RNG-REQ (MAC Address, etc)" message and transmits the "RNG-REQ (MAC Address, etc)" message to the BS 100 only in the case where the default values are not identical to the values recorded in the message-information management table 263 (as indicated in FIG. 6).

The functions of processing performed by the controller 150 in the BS 100 and the controller 250 in the MS 200 as explained above are realized by computers. In this case, a program describing details of processing for realizing the functions which each of the controller 150 and the controller 250 should have is provided. When a computer executes the program, the processing functions of one of the controller 150 and the controller 250 can be realized on the computer.

The program describing the details of the processing can be stored in a recording medium which can be read by the computer. The recording medium may be a magnetic recording device, an optical disk, an optical magnetic recording medium, a semiconductor memory, or the like. The magnetic recording device may be a hard disk drive (HDD), a flexible disk (FD), a magnetic tape (MT), or the like. The optical disk may be a DVD (Digital Versatile Disk), a DVD-RAM (Random Access Memory), a CD-ROM (Compact Disk-Read Only Memory), a CD-R (Recordable)/RW (ReWritable), or the like. The optical magnetic recording medium may be an MO (Magneto-Optical Disk) or the like.

In order to put each program into the market, for example, it is possible to sell a portable recording medium such as a DVD or a CD-ROM in which the program is recorded. Alternatively, it is possible to store the program in a storage device belonging to a server computer, and transfer the program to another computer through a network.

The computer which should execute the program stores the program in a storage device belonging to the computer, where the program is originally recorded in, for example, a portable recording medium, or is initially transferred from the server computer. The computer reads the program from the storage device, and performs processing in accordance with the program. Alternatively, the computer may directly read the program from the portable recording medium for performing processing in accordance with the program. Further alternatively, the computer can sequentially execute processing in accordance with each portion of the program every time the portion of the program is transferred from the server computer.

The present invention is not limited to the above embodiments, the embodiments can be variously modified within the scope of the invention.

The foregoing is considered as illustrative only of the principle of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

1 wireless terminal
1a message-parameter transmission means
1b message transmission means
2 wireless base station
2a trigger-message transmission means
2b bandwidth allocation means
2c allocation-information transmission means
3 message parameter
4 trigger message
5 allocation information
6 message to be transmitted

## Claims

1. A message exchange method for communication between a wireless base station (2) and a wireless terminal (1), comprising:
transmitting a message parameter (3) from said wireless terminal (1) to said wireless base station (2), where the message parameter (3) includes identification information identifying a trigger message (4) and a message size indicating a data length of a message to be transmitted (6) from the wireless terminal (1) to the wireless base station (2), and the trigger message (4) is a message to trigger transmission of the message to be transmitted (6);
transmitting said trigger message (4) from said wireless base station (2) to the wireless terminal (1), and thereafter allocating a wireless bandwidth corresponding to said message size of the message to be transmitted (6), to said wireless terminal (1) by said wireless base station (2);
transmitting allocation information (5) indicating the allocated wireless bandwidth from said wireless base station (2) to said wireless terminal (1); and
transmitting said message to be transmitted (6), from said wireless terminal (1) to said wireless base station (2) by using said wireless bandwidth indicated by said allocation information (5).

2. The message exchange method according to claim 1, wherein:
said wireless terminal (1) inserts in said message parameter (3) a time of delay occurring after reception of said trigger message (4) until completion of preparations for transmission of said message to be transmitted (6), when the wireless terminal (1) transmits the message parameter (3) to said wireless base station (2); and
the wireless base station (2) allocates a wireless bandwidth to the wireless terminal (1) after said time of delay elapses since the wireless base station (2) transmits the trigger message (4).

3. The message exchange method according to claim 2, wherein said wireless terminal (1) transmits said message parameter (3) to said wireless base station (2) only in the case where said message size, said time of delay, or a combination thereof of said message to be transmitted (6) is not identical to respective default values of the message size and the time of delay which are respectively predetermined.

4. The message exchange method according to claim 3, wherein said wireless base station (2) transmits to said wireless terminal (1) said default values of the message size and the time of delay of said message to be transmitted (6).

5. The message exchange method according to claim 4, wherein said wireless base station (2) transmits by broadcasting to said wireless terminal (1) said default values of the message size and the time of delay.

6. The message exchange method according to claim 1, wherein, in the case where said message to be transmitted (6) is not transmitted from said wireless terminal (1) through the allocated wireless bandwidth after said allocation information (5) is transmitted to the wireless terminal (1), said wireless base station (2) retransmits said trigger message (4), reallocates a wireless bandwidth to the wireless terminal (1), and transmits to the wireless terminal (1) allocation information (5) indicating the reallocated wireless bandwidth.

7. The message exchange method according to claim 6, wherein:
said wireless terminal (1) inserts in said message parameter (3) a time of delay occurring after reception of said trigger message (4) until completion of preparations for transmission of said message to be transmitted (6), when the wireless terminal (1) transmits the message parameter (3) to said wireless base station (2);
the wireless base station (2) allocates a wireless bandwidth to the wireless terminal (1) after said time of delay elapses since the wireless base station (2) transmits the trigger message (4); and
the wireless base station (2) reallocates a wireless bandwidth to the wireless terminal (1) after said time of delay elapses since the wireless base station (2) retransmits the trigger message (4).

8. The message exchange method according to claim 1, wherein said wireless base station (2) reallocates a wireless bandwidth to said wireless terminal (1), and transmits to the wireless terminal (1) allocation information (5) indicating the reallocated wireless bandwidth, in the case where the wireless base station (2) detects an error in said message to be transmitted (6) after the message to be transmitted (6) is transmitted from the wireless terminal (1).

9. The message exchange method according to claim 1, wherein said wireless base station (2) performs processing for adjustment of a transmission parameter of said wireless terminal (1) in the case where said message to be transmitted (6) is not transmitted from the wireless terminal (1) through the allocated wireless bandwidth after said allocation information (5) is transmitted to the wireless terminal (1), or in the case where the wireless base station (2) detects an error in the message to be transmitted (6) after the message to be transmitted (6) is transmitted from the wireless terminal (1).

10. The message exchange method according to claim 1, wherein
said wireless base station (2) retransmits said trigger message (4), reallocates a wireless bandwidth to said wireless terminal (1), and transmits to the wireless terminal (1) allocation information (5) indicating the reallocated wireless bandwidth in the case where said message to be transmitted (6) is not transmitted from the wireless terminal (1) through the allocated wireless bandwidth after said allocation information (5) is transmitted to the wireless terminal (1);
the wireless base station (2) reallocates a wireless bandwidth to the wireless terminal (1), and transmits to the wireless terminal (1) allocation information (5) indicating the reallocated wireless bandwidth in the case where the wireless base station (2) detects an error in the message to be transmitted (6) after the message to be transmitted (6) is transmitted from the wireless terminal (1); and
the wireless base station (2) sets the number of retransmissions of allocation information (5) in a retransmission number counter, and performs processing for adjustment of a transmission parameter of the wireless terminal (1) in the case where a value in the retransmission number counter is equal to or greater than a predetermined maximum number.

11. A wireless communication system in which wireless message exchange is performed, comprising:
a wireless terminal (1) including,
a message-parameter transmission means (1a) which transmits a message parameter (3) to a wireless base station (2), where the message parameter (3) includes identification information identifying a trigger message (4) and a message size indicating a data length of a message to be transmitted (6) to the wireless base station (2), and the trigger message (4) is a message to trigger transmission of the message to be transmitted (6), and
a message transmission means (1b) which transmits the message to be transmitted (6) to the wireless base station (2) by using a wireless bandwidth which is allocated by the wireless base station (2) and indicated by allocation information (5) after the wireless terminal (1) receives the trigger message (4) and the allocation information (5) from the wireless base station (2); and
said wireless base station (2) including,
a trigger-message transmission means (2a) which transmits said trigger message (4) to said wireless terminal (1),
a bandwidth allocation means (2b) which allocates to the wireless terminal (1) a wireless bandwidth corresponding to said message size of said message to be transmitted (6), after the trigger-message transmission means (2a) transmits the trigger message (4), when the wireless base station (2) receives said message parameter (3) from the wireless terminal (1), and
an allocation-information transmission means (2c) which transmits to the wireless terminal (1) said allocation information (5) indicating the first wireless bandwidth allocated by the bandwidth allocation means (2b).

12. The wireless communication system according to claim 11, wherein:
said message-parameter transmission means (1a) in said wireless terminal (1) inserts in said message parameter (3) a time of delay occurring after reception of said trigger message (4) until completion of preparations for transmission of said message to be transmitted (6), when the message-parameter transmission means (1a) transmits the message parameter (3) to said wireless base station (2); and
said bandwidth allocation means (2b) in said wireless base station (2) allocates said first wireless bandwidth to the wireless terminal (1) after said time of delay elapses since transmission of said trigger message (4).

13. The wireless communication system according to claim 12, wherein: said message-parameter transmission means (1a) in said wireless terminal (1) transmits said message parameter (3) to said wireless base station (2) only in the case where said message size, said time of delay, or a combination thereof of said message to be transmitted (6) is not identical to respective default values of the message size and the time of delay which are respectively predetermined.

14. The wireless communication system according to claim 13, wherein said wireless base station (2) further includes a default-value transmission means which transmits to said wireless terminal (1) said default values of the message size and the time of delay of said message to be transmitted (6).

15. The wireless communication system according to claim 14, wherein said wireless base station (2) transmits by broadcasting to said wireless terminal (1) said default values of the message size and the time of delay.

## Patentansprüche

1. Verfahren zum Nachrichtenaustausch zur Kommunikation zwischen einer drahtlosen Basisstation (2) und einem drahtlosen Endgerät (1), umfassend:
das Übertragen eines Nachrichtenparameters (3) von dem drahtlosen Endgerät (1) an die drahtlose Basisstation (2), wobei der Nachrichtenparameter (3) Identifizierungsinformationen enthält zur Identifizierung einer Trigger-Nachricht (4), und eine Nachrichtengröße zur Angabe einer Datenlänge einer Nachricht (6), die von dem drahtlosen Endgerät (1) an die drahtlose Basisstation (2) übertragen werden soll, und die Trigger-Nachricht (4) eine Nachricht ist, um die Übertragung der zu übertragenden Nachricht (6) auszulösen;
das Übertragen der Trigger-Nachricht (4) von der drahtlosen Basisstation (2) an das drahtlose Endgerät (1), und das nachfolgende Zuordnen einer drahtlosen Bandbreite, die der Nachrichtengröße der zu übertragenden Nachricht (6) entspricht, an das drahtlose Endgerät (1) durch die drahtlose Basisstation (2);
das Übertragen von Zuordnungsinformationen (5), die die zugewiesene drahtlose Bandbreite von der drahtlosen Basisstation (2) an das drahtlose Endgerät (1) angeben; und
das Übertragen der zu übertragenden Nachricht (6) von dem drahtlosen Endgerät (1) an die drahtlose Basisstation (2) durch Verwendung der drahtlosen Bandbreite, die von den Zuordnungsinformationen (5) angegeben ist.

2. Verfahren zum Nachrichtenaustausch nach Anspruch 1, wobei:
das drahtlose Endgerät (1) eine Verzögerungszeit in den Nachrichtenparameter (3) einfügt, die nach dem Empfang der Trigger-Nachricht (4) bis zur Beendigung der Vorbereitungen für die Übertragung der zu übertragenden Nachricht (6) auftritt, wenn das drahtlose Endgerät (1) den Nachrichtenparameter (3) an die drahtlose Basisstation (2) überträgt; und die drahtlose Basisstation (2) dem drahtlosen Endgerät (1) eine drahtlose Bandbreite zuordnet, nachdem die Verzögerungszeit abgelaufen ist, seit die drahtlose Basisstation (2) die Trigger-Nachricht (4) übertragen hat.

3. Verfahren zum Nachrichtenaustausch nach Anspruch 2, wobei das drahtlose Endgerät (1) den Nachrichtenparameter (3) an die drahtlose Basisstation (2) nur in dem Fall übermittelt, wenn die Nachrichtengröße, die Verzögerungszeit oder eine Kombination davon der zu übertragenden Nachricht (6) nicht identisch ist mit den jeweiligen Standardwerten der Nachrichtengröße und der Verzögerungszeit, die jeweils vorgegeben sind.

4. Verfahren zum Nachrichtenaustausch nach Anspruch 3, wobei die drahtlose Basisstation (2) die Standardwerte der Nachrichtengröße und der Verzögerungszeit der zu übertragenden Nachricht (6) an das drahtlose Endgerät (1) überträgt.

5. Verfahren zum Nachrichtenaustausch nach Anspruch 4, wobei die drahtlose Basisstation (2) die Standardwerte der Nachrichtengröße und der Verzögerungszeit durch Senden an das drahtlose Endgerät (1) überträgt.

6. Verfahren zum Nachrichtenaustausch nach Anspruch 1, wobei, falls die zu übertragende Nachricht (6) nicht von dem drahtlosen Endgerät (1) über die zugeordnete drahtlose Bandbreite übertragen wird, nachdem die Zuordnungsinformation (5) an das drahtlose Endgerät (1) übertragen wurde, die drahtlose Basisstation (2) die Trigger-Nachricht (4) erneut überträgt, dem drahtlosen Endgerät (1) erneut eine drahtlose Bandbreite zuordnet und Zuordnungsinformationen (5) über die erneut zugeordnete drahtlose Bandbreite an das drahtlose Endgerät (1) überträgt.

7. Verfahren zum Nachrichtenaustausch nach Anspruch 6, wobei:
das drahtlose Endgerät (1) eine Verzögerungszeit in den Nachrichtenparameter (3) einfügt, die nach dem Empfang der Trigger-Nachricht (4) bis zur Beendigung der Vorbereitungen für die Übertragung der zu übertragenden Nachricht (6) auftritt, wenn das drahtlose Endgerät (1) den Nachrichtenparameter (3) an die drahtlose Basisstation (2) überträgt;
die drahtlose Basisstation (2) dem drahtlosen Endgerät (1) eine drahtlose Bandbreite zuordnet, nachdem die Verzögerungszeit abgelaufen ist, seit die drahtlose Basisstation (2) die Trigger-Nachricht (4) übertragen hat; und
die drahtlose Basisstation (2) dem drahtlosen Endgerät (1) erneut eine drahtlose Bandbreite zuordnet, nachdem die Verzögerungszeit abgelaufen ist, seit die drahtlose Basisstation (2) die Trigger-Nachricht (4) erneut übertragen hat.

8. Verfahren zum Nachrichtenaustausch nach Anspruch 1, wobei die drahtlose Basisstation (2) dem drahtlosen Endgerät (1) erneut eine drahtlose Bandbreite zuordnet und dem drahtlosen Endgerät (1) Zuordnungsinformationen (5) über die erneut zugeordnete drahtlose Bandbreite übermittelt, falls die drahtlose Basisstation (2) einen Fehler in der zu übertragenden Nachricht (6) entdeckt, nachdem die zu übertragende Nachricht (6) von dem drahtlosen Endgerät (1) übertragen wurde.

9. Verfahren zum Nachrichtenaustausch nach Anspruch 1, wobei die drahtlose Basisstation (2) das Verarbeiten zwecks Einstellung eines Übertragungsparameters des drahtlosen Endgeräts (1) durchführt, falls die zu übertragende Nachricht (6) nicht von dem drahtlosen Endgerät (1) über die zugeordnete drahtlose Bandbreite übertragen wird, nachdem die Zuordnungsinformationen (5) an das drahtlose Endgerät (1) übertragen wurden, oder falls die drahtlose Basisstation (2) einen Fehler in der zu übertragenen Nachricht (6) entdeckt, nachdem die zu übertragende Nachricht (6) von dem drahtlosen Endgerät (1) übertragen wurde.

10. Verfahren zum Nachrichtenaustausch nach Anspruch 1, wobei
die drahtlose Basisstation (2) die Trigger-Nachricht (4) erneut überträgt, dem drahtlosen Endgerät (1) erneut eine drahtlose Bandbreite zuordnet und dem drahtlosen Endgerät (1) Zuordnungsinformationen (5) über die erneut zugeordnete drahtlose Bandbreite übermittelt, falls die zu übertragende Nachricht (6) nicht von dem drahtlosen Endgerät (1) über die zugeordnete drahtlose Bandbreite übertragen wird, nachdem die Zuordnungsinformationen (5) an das drahtlose Endgerät (1) übertragen wurden;
die drahtlose Basisstation (2) dem drahtlosen Endgerät (1) erneut eine drahtlose Bandbreite zuordnet und dem drahtlosen Endgerät (1) Zuordnungsinformationen (5) über die erneut zugeordnete drahtlose Bandbreite übermittelt, falls die drahtlose Basisstation (2) einen Fehler in der zu übertragenden Nachricht (6) entdeckt, nachdem die zu übertragende Nachricht (6) von dem drahtlosen Endgerät (1) übertragen wird; und
die drahtlose Basisstation (2) eine Anzahl von erneuten Übertragungen von Zuordnungsinformationen (5) in einem Zähler für erneute Übertragung festlegt und das Verarbeiten zwecks Einstellung eines Übertragungsparameters des drahtlosen Endgeräts (1) durchführt, falls ein Wert in dem Zähler für erneute Übertragung gleich oder größer ist als eine vorgegebene Höchstzahl.

11. Drahtloses Kommunikationssystem, bei dem ein drahtloser Nachrichtenaustausch erfolgt, umfassend:
ein drahtloses Endgerät (1), das Folgendes umfasst:
ein Mittel zum Übertragen von Nachrichtenparametern (1a), das einen Nachrichtenparameter (3) an die drahtlose Basisstation (2) überträgt, wobei der Nachrichtenparameter (3) Identifizierungsinformationen enthält zur Identifizierung einer Trigger-Nachricht (4), und eine Nachrichtengröße zur Angabe einer Datenlänge einer Nachricht (6), die an die drahtlose Basisstation (2) übertragen werden soll, und die Trigger-Nachricht (4) eine Nachricht ist, um die Übertragung der zu übertragenden Nachricht (6) auszulösen, und
ein Mittel zum Übertragen von Nachrichten (1b), das die zu übertragende Nachricht (6) an die drahtlose Basisstation (2) überträgt, indem eine drahtlose Bandbreite verwendet wird, die von der drahtlosen Basisstation (2) zugeordnet und von den Zuordnungsinformationen (5) angegeben wird, nachdem das drahtlose Endgerät (1) die Trigger-Nachricht (4) und die Zuordnungsinformationen (5) von der drahtlosen Basisstation (2) empfangen hat; und
die drahtlose Basisstation (2), die Folgendes umfasst:
ein Mittel zur Übertragung der Trigger-Nachricht (2a), das die Trigger-Nachricht (4) an das drahtlose Endgerät (1) überträgt,
ein Mittel zum Zuordnen einer Bandbreite (2b), die dem drahtlosen Endgerät (1) eine drahtlose Bandbreite zuordnet, die der Nachrichtengröße der zu übertragenden Nachricht (6) entspricht, nachdem das Mittel zur Übertragung der Trigger-Nachricht (2a) die Trigger-Nachricht (4) übertragen hat, wenn die drahtlose Basisstation (2) den Nachrichtenparameter (3) von dem drahtlosen Endgerät (1) empfängt, und
ein Mittel zum Übertragen von Zuordnungsinformationen (2c), das die Zuordnungsinformationen (5) zur Angabe der ersten drahtlosen Bandbreite über das Mittel zur Bandbreitenzuordnung (2b) an das drahtlose Endgerät (1) überträgt.

12. Drahtloses Kommunikationssystem nach Anspruch 11, wobei:
das Mittel zum Übertragen der Nachrichtenparameter (1a) in dem drahtlosen Endgerät (1) eine Verzögerungszeit in den Nachrichtenparameter (3) einfügt, die nach dem Empfang der Trigger-Nachricht (4) bis zur Beendigung der Vorbereitungen für die Übertragung der zu übertragenden Nachricht (6) auftritt, wenn das Mittel zum Übertragen der Nachrichtenparameter (1a) den Nachrichtenparameter (3) an die drahtlose Basisstation (2) überträgt; und
das Mittel zur Bandbreitenzuordnung (2b) in der drahtlosen Basisstation (2) die erste drahtlose Bandbreite dem drahtlosen Endgerät (1) zuordnet, nachdem die Verzögerungszeit seit der Übertragung der Trigger-Nachricht (4) abgelaufen ist.

13. Drahtloses Kommunikationssystem nach Anspruch 12, wobei das Mittel zum Übertragen der Nachrichtenparameter (1a) in dem drahtlosen Endgerät (1) den Nachrichtenparameter (3) an die drahtlose Basisstation (2) nur in dem Fall übermittelt, wenn die Nachrichtengröße, die Verzögerungszeit oder eine Kombination davon der zu übertragenden Nachricht (6) nicht identisch ist mit den jeweiligen Standardwerten der Nachrichtengröße und der Verzögerungszeit, die jeweils vorgegeben sind.

14. Drahtloses Kommunikationssystem nach Anspruch 13, wobei die drahtlose Basisstation (2) außerdem ein Mittel zum Übertragen von Standardwerten umfasst, das die Standardwerte der Nachrichtengröße und der Verzögerungszeit der zu übertragenden Nachricht (6) an das drahtlose Endgerät (1) überträgt.

15. Drahtloses Kommunikationssystem nach Anspruch 14, wobei die drahtlose Basisstation (2) die Standardwerte der Nachrichtengröße und der Verzögerungszeit durch Senden an das drahtlose Endgerät (1) überträgt.

## Revendications

1. Procédé d'échange de messages pour communication entre une station de base sans fil (2) et un terminal sans fil (1) comprenant :
la transmission d'un paramètre de message (3) dudit terminal sans fil (1) à ladite station de base sans fil (2), où le paramètre de message (3) comporte des informations d'identification identifiant un message de déclenchement (4) et une taille de message indiquant la longueur de données d'un message à transmettre (6) du terminal sans fil (1) à la station de base sans fil (2), et le message de déclenchement (4) est un message pour déclencher la transmission du message à transmettre (6) ;
la transmission dudit message de déclenchement (4) de ladite station de base sans fil (2) au terminal sans fil (1), et ensuite l'allocation d'une largeur de bande sans fil correspondant à ladite taille de message du message à transmettre (6), audit terminal sans fil (1) par ladite station de base sans fil (2) ;
la transmission d'informations d'allocation (5) indiquant la largeur de bande sans fil allouée par ladite station de base sans fil (2) audit terminal sans fil (1) ; et
la transmission dudit message à transmettre (6), dudit terminal sans fil (1) à ladite station de base sans fil (2) en utilisant ladite largeur de bande sans fil indiquée par lesdites informations d'allocation (5).

2. Procédé d'échange de messages selon la revendication 1, dans lequel :
ledit terminal sans fil (1) insère dans ledit paramètre de message (3) un temps de retard se produisant après réception dudit message de déclenchement (4) jusqu'à la fin des préparations pour transmission dudit message à transmettre (6), lorsque le terminal sans fil (1) transmet le paramètre de message (3) à ladite station de base sans fil (2) ; et
la station de base sans fil (2) alloue une largeur de bande sans fil au terminal sans fil (1) après que ledit temps de retard s'est écoulé depuis que la station de base sans fil (2) transmet le message de déclenchement (4).

3. Procédé d'échange de messages selon la revendication 2, dans lequel ledit terminal sans fil (1) transmet ledit paramètre de message (3) à ladite station de base sans fil (2) uniquement dans le cas où ladite taille de message, ledit temps de retard ou une combinaison de ceux-ci dudit message à transmettre (6) n'est pas identique à des valeurs respectives par défaut de la taille de message et du temps de retard qui sont respectivement prédéterminées.

4. Procédé d'échange de messages selon la revendication 3, dans lequel ladite station de base sans fil (2) transmet audit terminal sans fil (1) lesdites valeurs par défaut de la taille de message et du temps de retard dudit message à transmettre (6).

5. Procédé d'échange de messages selon la revendication 4, dans lequel ladite station de base sans fil (2) transmet par diffusion audit terminal sans fil (1) lesdites valeurs par défaut de la taille de message et du temps de retard.

6. Procédé d'échange de messages selon la revendication 1, dans lequel, dans le cas où ledit message à transmettre (6) n'est pas transmis par ledit terminal sans fil (1) par la largeur de bande sans fil allouée après que lesdites informations d'allocation (5) sont transmises au terminal sans fil (1), ladite station de base sans fil (2) retransmet ledit message de déclenchement (4), réalloue une largeur de bande sans fil au terminal sans fil (1), et transmet au terminal sans fil (1) des informations d'allocation (5) indiquant la largeur de bande sans fil réallouée.

7. Procédé d'échange de messages selon la revendication 6, dans lequel :
ledit terminal sans fil (1) insère dans ledit paramètre de message (3) un temps de retard se produisant après réception dudit message de déclenchement (4) jusqu'à la fin des préparations pour transmission dudit message à transmettre (6), lorsque le terminal sans fil (1) transmet le paramètre de message (3) à ladite station de base sans fil (2) ;
la station de base sans fil (2) alloue une largeur de bande sans fil au terminal sans fil (1) après que ledit temps de retard s'est écoulé depuis que la station de base sans fil (2) transmet le message de déclenchement (4) ; et
la station de base sans fil (2) réalloue une largeur de bande sans fil au terminal sans fil (1) après que ledit temps de retard s'est écoulé depuis que la station de base sans fil (2) retransmet le message de déclenchement (4).

8. Procédé d'échange de messages selon la revendication 1, dans lequel ladite station de base sans fil (2) réalloue une largeur de bande sans fil audit terminal sans fil (1) et transmet au terminal sans fil (1) des informations d'allocation (5) indiquant la largeur de bande sans fil réallouée, dans le cas où la station de base sans fil (2) détecte une erreur dans ledit message à transmettre (6) après que le message à transmettre (6) est transmis par le terminal sans fil (1).

9. Procédé d'échange de messages selon la revendication 1, dans lequel ladite station de base sans fil (2) exécute un traitement de réglage d'un paramètre de transmission dudit terminal sans fil (1) dans le cas où ledit message à transmettre (6) n'est pas transmis par le terminal sans fil (1) par la largeur de bande sans fil allouée après que lesdites informations d'allocation (5) sont transmises au terminal sans fil (1), ou dans le cas où la station de base sans fil (2) détecte une erreur dans le message à transmettre (6) après que le message à transmettre (6) est transmis par le terminal sans fil (1).

10. Procédé d'échange de messages selon la revendication 1, dans lequel
ladite station de base sans fil (2) retransmet ledit message de déclenchement (4), réalloue une largeur de bande sans fil audit terminal sans fil (1) et transmet au terminal sans fil (1) des informations d'allocation (5) indiquant la largeur de bande sans fil réallouée dans le cas où ledit message à transmettre (6) n'est pas transmis par le terminal sans fil (1) par la largeur de bande sans fil allouée après que lesdites informations d'allocation (5) sont transmises au terminal sans fil (1) ;
la station de base sans fil (2) réalloue une largeur de bande sans fil au terminal sans fil (1) et transmet au terminal sans fil (1) des informations d'allocation (5) indiquant la largeur de bande sans fil réallouée dans le cas où la station de base sans fil (2) détecte une erreur dans le message à transmettre (6) après que le message à transmettre (6) est transmis par le terminal sans fil (1) ; et
la station de base sans fil (2) fixe le nombre de retransmissions des informations d'allocation (5) dans un compteur de nombre de retransmissions, et exécute un traitement de réglage d'un paramètre de transmission du terminal sans fil (1) dans le cas où la valeur dans le compteur de nombre de retransmissions est supérieure ou égale à un nombre maximum prédéterminé.

11. Système de communication sans fil dans lequel un échange de messages sans fil est effectué, comprenant :
un terminal sans fil (1) incluant,
un moyen de transmission de paramètre de message (1a) qui transmet un paramètre de message (3) à une station de base sans fil (2), où le paramètre de message (3) comporte des informations d'identification identifiant un message de déclenchement (4) et une taille de message indiquant la longueur de données d'un message à transmettre (6) à la station de base sans fil (2), et le message de déclenchement (4) est un message pour déclencher la transmission du message à transmettre (6), et
un moyen de transmission de message (1b) qui transmet le message à transmettre (6) à la station de base sans fil (2) en utilisant une largeur de bande sans fil qui est allouée par la station de base sans fil (2) et indiquée par des informations d'allocation (5), après que le terminal sans fil (1) reçoit le message de déclenchement (4) et les informations d'allocation (5) depuis la station de base sans fil (2) ; et
ladite station de base sans fil (2) incluant,
un moyen de transmission de message de déclenchement (2a) qui transmet ledit message de déclenchement (4) audit terminal sans fil (1),
un moyen d'allocation de largeur de bande (2b) qui alloue au terminal sans fil (1) une largeur de bande sans fil correspondant à ladite taille de message dudit message à transmettre (6), après que le moyen de transmission de message de déclenchement (2a) transmet le message de déclenchement (4) lorsque la station de base sans fil (2) reçoit ledit paramètre de message (3) depuis le terminal sans fil (1), et
un moyen de transmission d'informations d'allocation (2c) qui transmet au terminal sans fil (1) lesdites informations d'allocation (5) indiquant la première largeur de bande sans fil allouée par le moyen d'allocation de largeur de bande (2b).

12. Système de communication sans fil selon la revendication 11, dans lequel :
ledit moyen de transmission de paramètre de message (1a) situé dans ledit terminal sans fil (1) insère dans ledit paramètre de message (3) un temps de retard se produisant après réception dudit message de déclenchement (4) jusqu'à la fin des préparations de transmission dudit message à transmettre (6), lorsque le moyen de transmission de paramètre de message (1a) transmet le paramètre de message (3) à ladite station de base sans fil (2) ; et
ledit moyen d'allocation de largeur de bande (2b) situé dans ladite station de base sans fil (2) alloue ladite première largeur de bande sans fil au terminal sans fil (1) après que ledit temps de retard s'est écoulé depuis la transmission dudit message de déclenchement (4).

13. Système de communication sans fil selon la revendication 12, dans lequel : ledit moyen de transmission de paramètre de message (1a) situé dans ledit terminal sans fil (1) transmet ledit paramètre de message (3) à ladite station de base sans fil (2) uniquement dans le cas où ladite taille de message, ledit temps de retard ou une combinaison de ceux-ci dudit message à transmettre (6) n'est pas identique aux valeurs par défaut respectives de la taille de message et du temps de retard qui sont respectivement prédéterminées.

14. Système de communication sans fil selon la revendication 13, dans lequel ladite station de base sans fil (2) comporte en outre un moyen de transmission de valeurs par défaut qui transmet audit terminal sans fil (1) lesdites valeurs par défaut de la taille de message et du temps de retard dudit message à transmettre (6).

15. Système de communication sans fil selon la revendication 14, dans lequel ladite station de base sans fil (2) transmet par diffusion audit terminal sans fil (1) lesdites valeurs par défaut de la taille de message et du temps de retard.
